# EUROPEAN PATENT SPECIFICATION

(11) **EP 4 446 904 B1**
(45) Date of publication and mention of the grant of the patent: **25.11.2026**
(21) Application number: 22918397.5
(22) Date of filing: 20.12.2022
(51) Int. Cl.: G06F 16/22, H04L 67/568

(54) **DATA SEARCH METHOD AND APPARATUS, AND NETWORK DEVICE**
DATENSUCHVERFAHREN UND -VORRICHTUNG SOWIE NETZWERKVORRICHTUNG
PROCÉDÉ ET APPAREIL DE RECHERCHE DE DONNÉES, ET DISPOSITIF DE RÉSEAU

(30) Priority: 07.01.2022 CN 202210024548; 16.03.2022 CN 202210257749
(43) Date of publication of application: 16.10.2024
(73) Proprietor: Huawei Technologies Co., Ltd., Shenzhen, Guangdong 518129 (CN)
(72) Inventor: HU, Jing, Shenzhen, Guangdong 518129 (CN); LIU, Yang, Shenzhen, Guangdong 518129 (CN)
(74) Representative: Thun, Clemens
(86) International application number: PCT/CN2022/140472
(87) International publication number: WO 2023/130953

(56) References cited:
- CN-A- 102 750 131
- CN-A- 107 766 478
- CN-A- 107 766 478
- CN-A- 112 379 843

## Description

### TECHNICAL FIELD

This application relates to the field of network technologies, and in particular, to a data search method and apparatus, and a network device.

### BACKGROUND

A network device often needs to search for data in a working process. For example, the network device needs to process a packet by searching for a data table. The data table may be various possible tables such as a packet forwarding table.

With the increase of network traffic, network devices in a network often need to search for data in parallel. For example, if a specific network device needs to process a plurality of packets at a same moment or in a same cycle (that is, the network device needs to process the plurality of packets in parallel), the network device needs to be capable of searching for a data table for the plurality of packets in parallel.

In a scenario in which the specific network device searches for data in parallel, how to avoid a conflict in a parallel search process performed by the network device, and reduce difficulty of parallel data search by the network device is an urgent problem to be resolved.

The document CN 107 766 478 A shows a design method of a concurrent index structure for high-competitive situations in memory handling.

### SUMMARY

The present invention is defined by the independent claims. Further advantageous developments are shown by the dependent claims.

This application provides a data search method and apparatus, and a network device. The data search apparatus is applied to the network device. A plurality of storage modules included in the data search apparatus are configured to store a data table, any one of the plurality of storage modules stores a part of entries of the data table, any entry in the data table is unique in the plurality of storage modules, and storage addresses of entries stored in at least one of the plurality of storage modules are inconsecutive. Because the storage addresses of the entries stored in the at least one of the plurality of storage modules are inconsecutive, in most cases, there is a low probability that the data search apparatus accesses a same storage module of the plurality of storage modules at a same moment or in a same cycle. In other words, in most cases, there is a low probability that entries requested in a plurality of search requests (for example, read/write requests) processed in parallel by the data search apparatus are located in a same storage module. This helps reduce a probability of a conflict in a parallel search process performed by the data search apparatus, and reduce difficulty of parallel data search by the data search apparatus.

### BRIEF DESCRIPTION OF DRAWINGS

FIG. 1 is a diagram of a memory architecture;
FIG. 2 is a diagram of a processing circuit;
FIG. 3 is a diagram of a structure of a data search apparatus according to an embodiment of this application;
FIG. 4 is a diagram of a structure of another data search apparatus according to an embodiment of this application;
FIG. 5 is a diagram of a structure of still another data search apparatus according to an embodiment of this application;
FIG. 6 is a diagram of a structure of still yet another data search apparatus according to an embodiment of this application;
FIG. 7 is a diagram of a structure of still another data search apparatus according to an embodiment of this application;
FIG. 8 is a diagram of a structure of still another data search apparatus according to an embodiment of this application;
FIG. 9 is a diagram of a structure of still another data search apparatus according to an embodiment of this application;
FIG. 10 is a flowchart of a data search method according to an embodiment of this application;
FIG. 11 is a flowchart of another data search method according to an embodiment of this application;
FIG. 12 is a flowchart of a method for storing a data table according to an embodiment of this application; and
FIG. 13 is a diagram of a structure of a network device according to an embodiment of this application.

### DESCRIPTION OF EMBODIMENTS

The following further describes in detail implementations of this application with reference to accompanying drawings.

A network device often needs to process a search request in a working process. The search request may include a read/write request (where the read/write request is a collective term for a read request and a write request). For example, the network device includes a storage module. The network device writes data into the storage module by processing a write request, and the network device reads, by processing a read request, data stored in the storage module. For example, the network device searches for, by processing a search request, data stored in the storage module. For example, the storage module stores a data table, and the network device processes a packet by searching for the data table stored in the storage module of the network device.

With the increase of network traffic, the network device often needs to process a plurality of search requests (for example, read/write requests) in parallel. In addition, in most cases, the plurality of search requests simultaneously processed by the network device belong to a same task, data requested in the plurality of search requests is continuous, and storage addresses of the continuous data in the storage module are also consecutive. That is, in most cases, the data with the consecutive storage addresses needs to be requested in the plurality of search requests processed in parallel by the network device. However, only one search operation (for example, a read operation or a write operation) is usually allowed to be performed at a same moment or in a same cycle on a same storage module. If storage addresses of data stored in the same storage module are consecutive, the data requested in the plurality of search requests processed in parallel by the network device is located in the same storage module in most cases. This easily causes a conflict in parallel processing of the plurality of search requests (where, for example, the conflict occurs in a parallel search process performed by the network device), and increases difficulty of parallel data search by the network device. Therefore, how to avoid the conflict in the parallel search process performed by the network device, and reduce the difficulty of the parallel data search is an urgent problem to be resolved.

In this application, the data table stored in the storage module of the network device may be various possible tables or data in a form of a table. In an example, the network device includes a forwarding chip. The forwarding chip includes a storage module. The storage module stores a packet forwarding table. The forwarding chip may search for, by processing a search request, the packet forwarding table stored in the storage module, to perform packet forwarding. With the increase of the network traffic, a bandwidth of the forwarding chip increases continuously (where, for example, a bandwidth of a switch doubles every one to two years, and a bandwidth of a router doubles every two to three years), a packet per second (packet per second, PPS) of the forwarding chip increases continuously, or even exceeds a clock frequency. In this case, the forwarding chip may need to process a plurality of packets in parallel at a same moment or in a same cycle. Therefore, the forwarding chip needs to be capable of searching for the packet forwarding table for the plurality of packets in parallel. Therefore, how to avoid a conflict in a parallel search process performed by the forwarding chip is an urgent problem to be resolved.

To resolve the problem of the conflict in the parallel search process performed by the forwarding chip, a conventional technology provides the following two solutions.

Solution 1: A plurality of storage modules are disposed in the forwarding chip, and the same packet forwarding table is stored in the plurality of storage modules. When the forwarding chip needs to process the plurality of search requests in parallel, the forwarding chip searches the plurality of storage modules for the packet forwarding table in parallel based on a one-to-one correspondence between the plurality of search requests and the plurality of storage modules. Because the packet forwarding table searched in parallel by the forwarding chip is located in the plurality of storage modules, in other words, storage modules accessed in parallel by the forwarding chip are different storage modules, the conflict in the parallel search process performed by the forwarding chip can be avoided. However, in the solution 1, the plurality of storage modules need to be disposed in the forwarding chip to store the same packet forwarding table. Therefore, overheads of storage resources (for example, memory resources) of the forwarding chip are high, and the plurality of storage modules easily cause a large area of the forwarding chip and high costs of the forwarding chip.

Solution 2: An N-read N-write memory architecture is disposed in the forwarding chip to store the same packet forwarding table, a processing circuit corresponding to the memory architecture is disposed in the forwarding chip, and the packet forwarding table stored in the memory architecture is searched in parallel through the processing circuit.

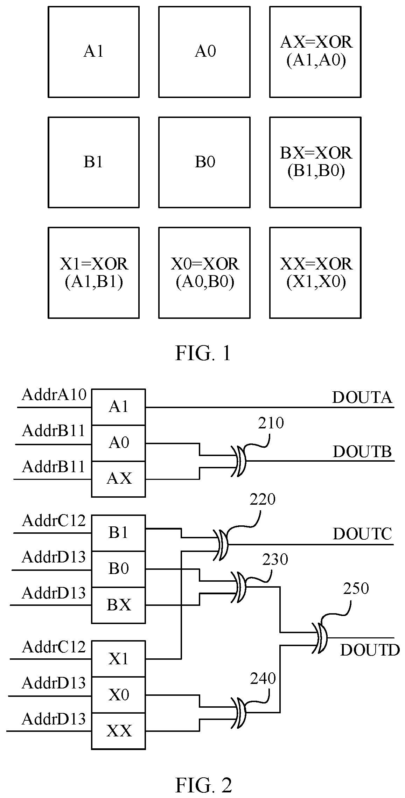

A 4-read 4-write memory architecture is used as an example. For the memory architecture, refer to FIG. 1. For the processing circuit corresponding to the memory architecture, refer to FIG. 2. As shown in FIG. 1, the memory architecture includes storage modules A0, A1, B0, and B1, and the storage modules A0, A1, B0, and B1 are configured to store the packet forwarding table. In addition, each of the storage modules A0, A1, B0, and B1 is configured to store a part of data in the packet forwarding table. The storage modules A0, A1, B0, and B1 are separately configured to provide one-time read/write performance. To support a 4-read 4-write requirement, the memory architecture further includes storage modules AX, BX, X0, X1, and XX. A storage module AX is configured to store an exclusive OR (XOR) result of data in two storage modules A0 and A1. A storage module BX is configured to store an exclusive OR result of data in two storage modules B0 and B1. A storage module X1 is configured to store an exclusive OR result of data in two storage modules A1 and B1. A storage module X0 is configured to store an exclusive OR result of data in two storage modules A0 and B0. A storage module XX is configured to store an exclusive OR result of data in two storage modules X1 and X0. As shown in FIG. 2, the processing circuit includes gate circuits 210, 220, 230, 240, and 250. An output end of a storage module A1 is connected to a port DOUTA. An output end of a storage module A0 and an output end of the storage module AX are separately connected to an input end of a gate circuit 210, and an output end of the gate circuit 210 is connected to a port DOUTB. An output end of a storage module B1 and an output end of the storage module X1 are separately connected to an input end of a gate circuit 220, and an output end of the gate circuit 220 is connected to a port DOUTC. An output end of a storage module B0 and an output end of the storage module BX are separately connected to an input end of a gate circuit 230. An output end of the storage module X0 and an output end of the storage module XX are separately connected to an input end of a gate circuit 240. An output end of the gate circuit 230 and an output end of the gate circuit 240 are separately connected to an input end of a gate circuit 250. An output end of the gate circuit 250 is connected to a port DOUTD.

It is assumed that the forwarding chip needs to process four search requests AddrA10, AddrB11, AddrC12, and AddrD13 in parallel (where AddrA10 is from a port A and used for accessing data whose storage address is 10, AddrB11 is from a port B and used for accessing data whose storage address is 11, AddrC12 is from a port C and used for accessing data whose storage address is 12, and AddrD13 is from a port D and used for accessing data whose storage address is 13), and all data requested in the four search requests is stored in the storage module A1. For a search request AddrA10, the forwarding chip reads, based on the search request AddrA10, the data that is stored in the storage module A1 and whose storage address is 10, and outputs the data through the port DOUTA. For a search request AddrB11, because the storage module A1 is accessed, the storage module A1 cannot be accessed in the search request AddrB11. The forwarding chip reads, based on the search request AddrB11, data that is stored in the storage module A0 and whose storage address is 11 and data that is stored in the storage module AX and whose storage address is 11, inputs, into the gate circuit 210, data read from storage modules A0 and AX, performs, through the gate circuit 210, exclusive OR processing (A0⊕AX=A0⊕(A1⊕A0)=A1) on the data read from the storage modules A0 and AX, and outputs an exclusive OR result through the port DOUTB, where the exclusive OR result is the data requested in the search request AddrB11. For a search request AddrC12, because storage modules A0, A1, and AX are accessed, the storage modules A0, A1, and AX cannot be accessed in the search request AddrC12. The forwarding chip reads, based on the search request AddrC12, data that is stored in the storage module B1 and whose storage address is 12 and data that is stored in the storage module X1 and whose storage address is 12, inputs, into the gate circuit 220, data read from storage modules B1 and X1, performs, through the gate circuit 220, exclusive OR processing (B1⊕X1=B1⊕(A1⊕B1)=A1) on the data read from the storage modules B1 and X1, and outputs an exclusive OR result through the port DOUTC, where the exclusive OR result is the data requested in the search request AddrC12. For a search request AddrD13, because storage modules A0, A1, AX, B1, and X1 are all accessed, the storage modules A0, A1, AX, B1, and X1 cannot be accessed in the search request AddrD13. The forwarding chip reads, based on the search request AddrD13, data that is stored in the storage module B0 and whose storage address is 13, data that is stored in the storage module BX and whose storage address is 13, data that is stored in the storage module X0 and whose storage address is 13, and data that is stored in the storage module XX and whose storage address is 13, inputs, into the gate circuit 230, data read from the storage modules B0 and BX, inputs, into the gate circuit 240, data read from the storage modules X0 and XX, performs, through the gate circuit 230, exclusive OR processing (B0⊕BX=B0⊕(B1⊕B0)=B1) on the data read from the storage modules B0 and BX, performs, through the gate circuit 240, exclusive OR processing (X0⊕XX=X0⊕(X1⊕X0)=X1=A1⊕B1) on the data read from the storage modules X0 and XX, where an exclusive OR result output by the gate circuit 230 and an exclusive OR result output by the gate circuit 240 are separately input into the gate circuit 250, performs, through the gate circuit 250, exclusive OR processing (B1⊕(A1⊕B1)=A1) on the exclusive OR result output by the gate circuit 230 and the exclusive OR result output by the gate circuit 240, and outputs an exclusive OR result of the gate circuit 250 through the port DOUTD, where the exclusive OR result is the data requested in the search request AddrD13.

In the solution 2, a plurality of storage modules are configured to store one packet forwarding table, and each storage module stores the part of data in the packet forwarding table. Therefore, compared with the solution 1, the solution 2 avoids the conflict in the parallel search process, and reduces overheads of storage resources (for example, memory resources) of the forwarding chip (where only one copy of packet forwarding table is stored, which occupies less storage space). However, in the solution 2, the additional process circuit needs to be added. As a result, processing logic of the forwarding chip is complex and power consumption is high. In addition, the solution 2 requires additional storage modules (for example, AX, BX, X0, X1, and XX) to store an exclusive OR result of data in the packet forwarding table, and the overheads of the storage resources of the forwarding chip are still high.

Embodiments of this application provide a data search method and apparatus, and a network device. The data search apparatus includes a plurality of storage modules. The plurality of storage modules are configured to store a data table, any one of the plurality of storage modules stores a part of entries of the data table, any entry in the data table is unique in the plurality of storage modules, and storage addresses of entries stored in at least one of the plurality of storage modules are inconsecutive. In most cases, data with consecutive storage addresses needs to be requested in a plurality of search requests (for example, read/write requests) processed in parallel by the network device. However, in this application, the storage addresses of the entries stored in the at least one storage module included in the data search apparatus are inconsecutive. Therefore, in most cases, there is a low probability that entries requested in the plurality of search requests processed in parallel by the data search apparatus are located in a same storage module, so that a probability of a conflict in a process of processing the plurality of search requests in parallel by the data search apparatus can be reduced. For example, a probability of a conflict in a parallel search process performed by the data search apparatus is reduced, thereby reducing difficulty of parallel data search by the data search apparatus.

The data search apparatus provided in this embodiment of this application may be included in a forwarding chip (for example, an NP chip). The plurality of storage modules included in the data search apparatus are configured to store the same data table, and the any one of the plurality of storage modules stores the part of entries of the data table. That is, the data search apparatus stores entries of the same data table in different storage modules in a distributed manner. Therefore, in comparison with the foregoing solution 1, the technical solution provided in this application helps reduce overheads of storage resources of the forwarding chip, reduce an area of the forwarding chip, and reduce costs of the forwarding chip. In comparison with the foregoing solution 2, in the technical solution provided in this application, an additional processing circuit or additional storage modules (for example, AX, BX, X0, X1, and XX) do not need to be added, so that processing logic of the forwarding chip is simplified, power consumption of the forwarding chip and the overheads of the storage resources of the forwarding chip are reduced, the area of the forwarding chip is reduced, and the costs of the forwarding chip are reduced.

The following describes the technical solutions of this application. First, an embodiment of a data search apparatus in this application is described with reference to the accompanying drawings.

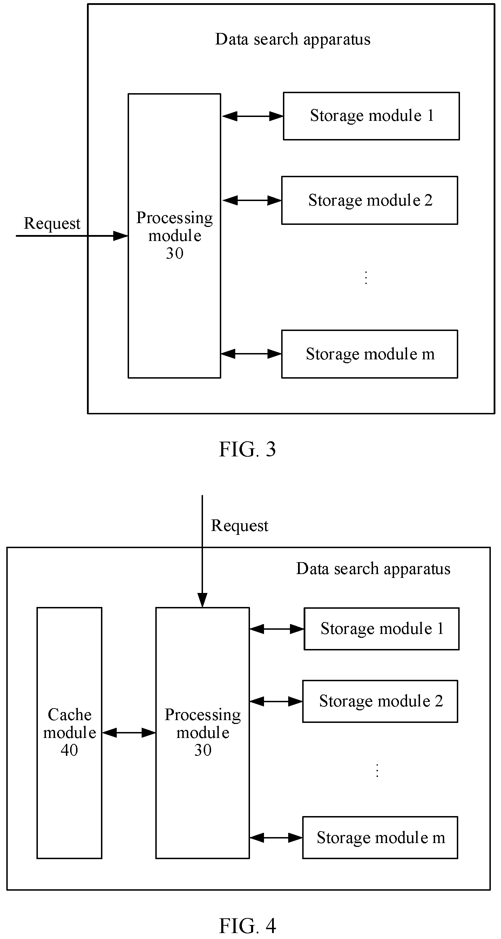

FIG. 3 is a diagram of a structure of a data search apparatus according to an embodiment of this application. The data search apparatus is applied to a network device. As shown in FIG. 3, the data search apparatus includes a plurality of storage modules (where, in FIG. 3, an example in which the plurality of storage modules are storage modules 1 to m is used for description, and m is an integer greater than 1). The plurality of storage modules are configured to store a data table (for example, a data table 1), any one of the plurality of storage modules stores a part of entries of the data table 1, any entry in the data table 1 is unique in the plurality of storage modules, and storage addresses of entries stored in at least one of the plurality of storage modules are inconsecutive. That is, the entries of the data table 1 are stored in the plurality of storage modules in a distributed manner.

The data table 1 may be various possible tables or data in a form of a table. For example, the data table 1 is a packet forwarding table. A storage address of any entry stored in any storage module may indicate a storage location of the entry in the storage module. Optionally, the storage modules 1 to m are included in a memory of the network device, and a storage address of any entry stored in the storage module may be a memory address of the entry. In this embodiment of this application, an example in which the storage modules 1 to m are configured to store the data table is used for description. In another embodiment, the storage modules 1 to m may be further configured to store another data structure, and any one of the storage modules 1 to m stores a part of data of the data structure. Storage addresses of data stored in at least one of the storage modules 1 to m are inconsecutive. For example, the data structure may be program code. This is not limited in embodiments of this application.

In conclusion, according to the data search apparatus provided in this embodiment of this application, the data search apparatus includes the plurality of storage modules, the plurality of storage modules are configured to store the data table, the any one of the plurality of storage modules stores the part of entries of the data table, and the storage addresses of the entries stored in the at least one of the plurality of storage modules are inconsecutive. Therefore, in most cases, there is a low probability that entries requested in a plurality of search requests processed in parallel by the data search apparatus are located in a same storage module. This helps reduce a probability of a conflict in a process of processing the plurality of search requests in parallel by the data search apparatus. For example, a probability of a conflict in a parallel search process performed by the data search apparatus is reduced, thereby reducing difficulty of parallel data search.

Still refer to FIG. 3. The data search apparatus provided in this application may further include a processing module 30. The processing module 30 is separately connected to the storage modules 1 to m. The processing module 30 is configured to receive a search request, and determine, based on key information carried in the search request, a storage module requested in the search request and an entry that is stored in the storage module and that is requested in the search request. The key information carried in the search request may be key information of the entry requested in the search request, and key information of any entry may be located in the entry or may be other information related to the entry. For example, the data table 1 is the packet forwarding table, an entry in the packet forwarding table is a forwarding entry, the forwarding entry may include a packet address and a port identifier, and key information of the forwarding entry may be the packet address included in the forwarding entry. For another example, the key information of the entry may be a logical address of the entry, a hash value of the entry, or the like. This is not limited in embodiments of this application.

In an optional embodiment, the search request received by the processing module 30 includes a first search request, and the processing module 30 is configured to determine, based on first key information carried in the first search request, a first storage module and a first entry stored in the first storage module. The storage modules 1 to m include the first storage module, the data table 1 includes the first entry, and the first key information is key information of the first entry. For example, the processing module 30 first determines the first storage module based on the first key information, and then determines, based on the first key information, the first entry stored in the first storage module. For example, the first search request is a read request. That the processing module 30 determines the first entry stored in the first storage module may be that the processing module 30 reads the first entry stored in the first storage module.

In an optional embodiment, the first storage module is determined further based on a first mapping relationship. The first mapping relationship includes a mapping relationship between the first key information and an identifier of the first storage module. That is, the processing module 30 determines the first storage module based on the first key information and the first mapping relationship. For example, the first mapping relationship is a mapping table. The processing module 30 searches for the first mapping relationship based on the first key information, to determine the identifier of the first storage module corresponding to the first key information. Then, the processing module 30 determines the first storage module based on the identifier of the first storage module.

In this embodiment of this application, an example in which the first mapping relationship is the mapping table is used for description. In another embodiment, the first mapping relationship may alternatively be a mapping formula, a mapping algorithm, or the like. For example, the first mapping relationship is a hash algorithm. The processing module 30 may calculate a hash value of the first key information, and determine, based on the hash value of the first key information, the identifier of the first storage module storing the first entry. Optionally, the processing module 30 determines that the hash value of the first key information is the identifier of the first storage module storing the first entry. Alternatively, the processing module 30 determines a remainder of the hash value of the first key information as the identifier of the first storage module storing the first entry. Alternatively, the processing module 30 may determine values of fixed bits of the hash value of the first key information as the identifier of the first storage module storing the first entry. When the first mapping relationship is the mapping formula or the mapping algorithm, an identifier of each of the storage modules 1 to m may be determined using a corresponding mapping formula or a corresponding mapping algorithm before the processing module 30 stores the data table 1 in the storage modules 1 to m. This is not limited in embodiments of this application.

In an optional embodiment, the processing module 30 is configured to determine a first storage address based on the first key information. The first storage address indicates a storage location of the first entry in the first storage module. After determining the first storage address, the processing module 30 may determine, based on the first storage address, the first entry stored in the first storage module. The first storage address may be a physical address. In an example of this application, the processing module 30 determines a first offset address (to be specific, an offset address of the first entry in the first storage module) based on the first key information, and determines the first storage address based on the first offset address. For example, the processing module 30 maintains a second mapping relationship, the second mapping relationship is a mapping relationship between key information and an offset address, and the second mapping relationship includes a mapping relationship between the first key information and the first offset address. The processing module 30 determines the first offset address based on the first key information and the second mapping relationship, and determines the first storage address based on an initial address (where the initial address is a physical address) of the first storage module and the first offset address. For example, the second mapping relationship is a mapping table. The processing module 30 searches for the second mapping relationship based on the first key information, to determine the first offset address corresponding to the first key information. The processing module 30 may add the initial address of the first storage module and the first offset address to obtain the first storage address.

In this embodiment of this application, an example in which the second mapping relationship is the mapping table is used for description. In another embodiment, the second mapping relationship may alternatively be a mapping formula, a mapping algorithm, or the like. In this embodiment of this application, the first mapping relationship and the second mapping relationship may be two mapping tables that are independent of each other. In another embodiment, the first mapping relationship and the second mapping relationship may be located in a same mapping table (for example, referred to as a target mapping table), and the target mapping table includes the mapping relationship between the first key information and the identifier of the first storage module, and includes the mapping relationship between the first key information and the first offset address. For example, the target mapping table includes a mapping relationship between the first key information, the identifier of the first storage module, and the first offset address.

In an optional embodiment, the processing module 30 is further configured to: receive a second search request, where the second search request carries second key information, and the first search request and the second search request are search requests that need to be simultaneously processed by the processing module 30; determine the first storage module based on the second key information; and cache a search requirement of the second search request based on that a storage module requested in the first search request is the same as a storage module requested in the second search request (where the two requested storage modules are both the first storage module). For an implementation process in which the processing module 30 determines the first storage module based on the second key information, refer to the implementation process in which the processing module 30 determines the first storage module based on the first key information. Details are not described herein again. The second search request is used to request an entry stored in the first storage module, and an entry requested in the second search request may be the first entry, or may not be the first entry. Because only one search operation (for example, a read/write operation) is usually allowed to be performed on a same storage module at a same moment or in a same cycle, when determining that the storage module requested in the first search request is the same as the storage module requested in the second search request, the processing module caches the search requirement of the second search request, so that a conflict between a processing process of the first search request and a processing process of the second search request can be avoided.

That the processing module 30 caches the search requirement of the second search request may mean that the processing module 30 suspends processing of the second search request when determining that the storage module requested in the first search request is the same as the storage module requested in the second search request. The processing module 30 may continue to process the second search request after the processing module 30 completes processing of the first search request. The processing module 30 may have cache space, and the processing module 30 may cache the search requirement of the second search request in the cache space of the processing module 30. For example, the processing module 30 receives a plurality of search requests including the second search request, and the plurality of search requests are all search requests that need to be simultaneously processed with the first search request by the processing module 30. In addition, storage modules requested in the plurality of search requests are the same as the storage module requested in the first search request. The processing module 30 may cache search requirements of the plurality of search requests in the cache space of the processing module 30. After the processing module 30 completes the processing of the first search request, the processing module 30 may schedule the plurality of search requests according to a scheduling algorithm, and continue to process the plurality of search requests. The scheduling algorithm may be a round robin (round robin, RR) algorithm, a weighed fair queueing (weighed fair queueing, WFR) algorithm, a strict priority (strict priority, SP) algorithm, or the like. In different service scenarios, the processing module 30 may schedule the search requests by using different scheduling algorithms, to ensure search performance of the data search apparatus.

FIG. 4 is a diagram of a structure of another data search apparatus according to an embodiment of this application. Based on FIG. 3, the data search apparatus further includes a cache (cache) module 40. The cache module 40 is configured to store an entry with access frequency greater than a frequency threshold in a data table 1. To be specific, two copies of the entry with the access frequency greater than the frequency threshold in the data table 1 may be stored. One copy is stored in a storage module, and the other copy is stored in the cache module 40. A processing module 30 is further configured to: for each received search request, determine, based on key information carried in the search request, whether an entry requested in the search request is stored in the cache module 40; if the entry requested in the search request is stored in the cache module 40, determine the entry stored in the cache module 40; and if the entry requested in the search request is not stored in the cache module 40, determine, based on the key information carried in the search request, a storage module requested in the search request and the entry stored in the storage module.

For example, after receiving a first search request, the processing module 30 determines, based on first key information carried in the first search request, whether a first entry is stored in the cache module 40. If the processing module 30 determines that the first entry is stored in the cache module 40, the processing module 30 determines the first entry stored in the cache module 40. If the processing module 30 determines that the first entry is not stored in the cache module 40, the processing module 30 determines, based on the first key information, a first storage module and the first entry stored in the first storage module. For example, the first search request is a read request. If the processing module 30 determines that the first entry is stored in the cache module 40, the processing module 30 directly reads the first entry stored in the cache module 40. If the processing module 30 determines that the first entry is not stored in the cache module 40, the processing module 30 determines the first storage module based on the first key information, and reads the first entry stored in the first storage module. For example, a second search request is used to request a second entry, and second key information is key information of the second entry. After receiving the second search request, the processing module 30 determines, based on the second key information carried in the second search request, whether the second entry is stored in the cache module 40. If the processing module 30 determines that the second entry is stored in the cache module 40, the processing module 30 determines the second entry stored in the cache module 40. If the processing module 30 determines that the second entry is not stored in the cache module 40, the processing module 30 determines the first storage module based on the second key information. For example, the second search request is a read request. If the processing module 30 determines that the second entry is stored in the cache module 40, the processing module 30 directly reads the second entry stored in the cache module 40. If the processing module 30 determines that the second entry is not stored in the cache module 40, the processing module 30 determines the first storage module based on the second key information.

In an example, the entry with the access frequency greater than the frequency threshold in the data table 1 is referred to as a hot entry, and an association relationship between key information and the hot entry may be stored in the cache module 40. Each hot entry in the association relationship is the entry with the access frequency greater than the frequency threshold in the data table 1. The key information associated with each hot entry in the association relationship is key information of the hot entry. The processing module 30 may determine whether the association relationship in the cache module 40 includes the first key information. If the association relationship in the cache module 40 includes the first key information, the processing module 30 determines that the first entry is stored in the cache module 40, and determines, as the first entry, a hot entry associated with the first key information in the association relationship. If the association relationship in the cache module 40 does not include the first key information, the processing module 30 determines that the first entry is not stored in the cache module 40. For an implementation process in which the processing module 30 determines whether the second entry is stored in the cache module 40, refer to the implementation process in which the processing module 30 determines whether the first entry is stored in the cache module 40. Details are not described herein in this embodiment of this application.

In this embodiment of this application, for any entry in the data table 1, if the entry is stored in the cache module 40, when processing a search request used to request the entry, the processing module 30 may determine, based on key information carried in the search request, that the entry is stored in the cache module 40. This case may be understood as that the processing module 30 hits the cache module 40. This state may be referred to as a cache hit (cache hit) state. If the entry is not stored in the cache module 40, when processing the search request used to request the entry, the processing module 30 determines, based on the key information carried in the search request, that the entry is not stored in the cache module 40. This case may be understood as that the processing module 30 misses the cache module 40. This state may be referred to as a cache miss (cache miss) state. The data search apparatus provided in this embodiment of this application includes the cache module 40, and the cache module 40 is configured to store the hot entry in the data table 1. Therefore, for a search request used to request the hot entry, the processing module 30 may determine, from the cache module 40, the entry requested in the search request, without determining, from the storage module, the entry requested in the search request. A speed at which the processing module 30 determines the entry from the cache module 40 is faster than a speed at which the processing module determines the entry from the storage module, and when the entry requested in the search request is stored in the cache module 40, the processing module 30 does not need to determine, from the storage module, the entry requested in the search request. Therefore, a speed and efficiency that are of determining the entry by the processing module 30 are improved, thereby improving efficiency of processing the search request by the processing module 30.

In this embodiment of this application, the processing module 30 may further update the entry stored in the cache module 40 in real time or periodically, and age out a cold entry stored in the cache module 40 in time. For example, the processing module 30 collects statistics on access frequency of entries in the data table 1 stored in storage modules 1 to m in real time or periodically, stores the hot entry in the data table 1 in the cache module 40 based on a statistical result, and deletes the cold entry in the data table 1 from the cache module 40 based on the statistical result (where, for example, as time goes by, because some entries stored in the cache module 40 are not accessed for a long time, access frequency of the entries each is less than the frequency threshold, and these entries become hot entries because the access frequency decreases). By updating the entry stored in the cache module 40, the processing module 30 may ensure that each of all entries stored in the cache module 40 is the entry with the access frequency greater than the frequency threshold in the data table 1.

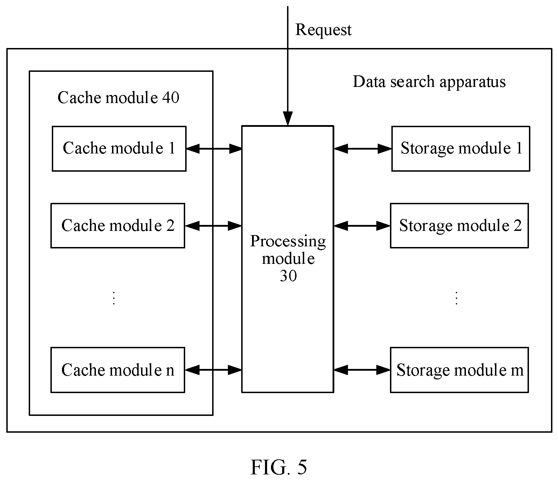

In an optional embodiment, FIG. 5 is a diagram of a structure of still another data search apparatus according to an embodiment of this application. As shown in FIG. 5, a cache module 40 includes a plurality of cache submodules (where, in this embodiment of this application, an example in which the plurality of cache submodules are cache submodules 1 to n is used for description, and n is an integer greater than 1). A processing module 30 is separately connected to the cache submodules 1 to n, and the cache submodules 1 to n may be in a one-to-one correspondence with n search requests. For each search request in the n search requests that need to be processed in parallel by the processing module 30, the processing module 30 determines, based on key information carried in the search request, whether an entry requested in the search request is stored in a cache submodule corresponding to the search request. If the entry requested in the search request is stored in the cache submodule corresponding to the search request, the processing module 30 determines the entry stored in the cache submodule corresponding to the search request. If the entry requested in the search request is not stored in the cache submodule corresponding to the search request, the processing module 30 determines, based on the key information carried in the search request, a storage module requested in the search request, and determines the entry that is requested in the search request and that is stored in the storage module. A quantity (that is, a value of n) of the cache submodules included in the cache module 40 may be determined based on a parallel processing capability (or a parallel processing requirement) of the data search apparatus. For example, the quantity of the cache submodules included in the cache module 40 is equal to a maximum quantity of search requests that can be simultaneously processed by the data search apparatus.

For example, after receiving a first search request, the processing module 30 determines, based on first key information carried in the first search request, whether a first entry is stored in a first cache submodule (for example, a cache submodule 1). If the first entry is stored in the first cache submodule, the processing module 30 determines the first entry stored in the first cache submodule. If the first entry is not stored in the first cache submodule, the processing module 30 determines, based on the first key information, a first storage module and the first entry stored in the first storage module. After receiving a second search request, the processing module 30 determines, based on second key information carried in the second search request, whether a second entry is stored in a second cache submodule (for example, a cache submodule 2). If the second entry is stored in the second cache submodule, the processing module 30 determines the second entry stored in the second cache submodule. If the second entry is not stored in the second cache submodule, the processing module 30 determines the first storage module based on the second key information, and caches a search requirement of the second search request based on that a storage module requested in the first search request is the same as a storage module requested in the second search request (where the two requested storage modules are the first storage module).

In an optional embodiment, m is greater than n. That is, a quantity of storage modules is greater than the quantity of the cache submodules included in the cache module 40. Because the quantity of the cache submodules included in the cache module 40 may be equal to the maximum quantity of search requests that can be simultaneously processed by the data search apparatus, in this embodiment of this application, the quantity of storage modules is set to be greater than the quantity of the cache submodules included in the cache module 40, in other words, the quantity of storage modules is set to be greater than the maximum quantity of search requests that can be simultaneously processed by the data search apparatus. In this way, a probability that a same storage module is accessed in a plurality of search requests in parallel can be reduced, a conflict in a parallel search process for the plurality of search requests is avoided, and search performance of the data search apparatus can be ensured.

In this embodiment of this application, the processing module 30 is further configured to: obtain a data table 1 based on a received write request, and store the data table 1 in storage modules 1 to m. The processing module 30 stores the data table 1 to the storage modules 1 to m, so that the processing module 30 can search the storage modules 1 to m for an entry in the data table 1 based on a received search request.

In an optional embodiment, the processing module 30 is further configured to: obtain the data table 1 based on the write request received by the processing module 30; determine the first key information of the first entry in the data table 1; and write the first entry into the first storage module based on the first key information and according to a predetermined algorithm, where the predetermined algorithm is used to make storage addresses of entries written into at least one of the storage modules 1 to m inconsecutive. The predetermined algorithm may include one of a hash algorithm and a random algorithm. In an example, the write request carries indication information of the data table 1, and the processing module 30 obtains the data table 1 based on the indication information of the data table 1. The indication information of the data table 1 may be an identifier of the data table 1, a name of the data table 1, a storage location of the data table 1, or the like. After the processing module 30 obtains the data table 1, for each entry in the data table 1, the processing module 30 may obtain key information of the entry, and write the entry into one of the storage modules 1 to m based on the key information of the entry and according to the predetermined algorithm. In such a processing manner, the processing module 30 may store the data table 1 into the storage modules 1 to m, and enable any one of the storage modules 1 to m to store a part of entries of the data table 1, each entry in the data table 1 is unique in the storage modules 1 to m, and storage addresses of entries stored in the at least one of the storage modules 1 to m are inconsecutive.

An example in which the processing module 30 writes the first entry into the first storage module is used for description. After obtaining the data table 1, the processing module 30 first determines the first key information of the first entry in the data table 1, then determines, based on the first key information and according to the predetermined algorithm, an identifier of the first storage module that can be used to store the first entry, determines the first storage module based on the identifier of the first storage module, and writes the first entry into the first storage module. Optionally, the predetermined algorithm is the hash algorithm. The processing module 30 may calculate a hash value of the first key information, and determine, based on the hash value of the first key information, the identifier of the first storage module that can be used to store the first entry. For example, the processing module 30 may determine the hash value of the first key information as the identifier of the first storage module that can be used to store the first entry. Alternatively, the processing module 30 may determine a remainder of the hash value of the first key information as the identifier of the first storage module that can be used to store the first entry. Alternatively, the processing module 30 may determine values of fixed bits of the hash value of the first key information as the identifier of the first storage module that can be used to store the first entry.

In this embodiment of this application, the processing module 30 obtains the data table 1 based on a table, and writes entries in the data table 1 into the storage modules 1 to m based on the entries. In another embodiment, the processing module 30 may obtain the data table 1 based on entries, and write the entries in the data table 1 into the storage modules 1 to m based on the entries. That is, each time the processing module 30 obtains one entry in the data table 1, the processing module 30 writes the entry into one of the storage modules 1 to m based on key information of the entry and according to the predetermined algorithm, until all entries in the data table 1 are written into the storage modules. This is not limited in embodiments of this application.

After storing the data table 1 into the storage modules 1 to m, the processing module 30 may further generate a first mapping relationship based on key information of each entry in the data table 1 and an identifier of a storage module in which each entry in the data table 1 is located. For example, the processing module 30 correspondingly stores the key information of each entry in the data table 1 and the identifier of the storage module in which each entry is located, to obtain the first mapping relationship, where the first mapping relationship includes a mapping relationship between the first key information and the identifier of the first storage module. After storing the data table 1 into the storage modules 1 to m, the processing module 30 may further generate a second mapping relationship based on the key information of each entry in the data table 1 and an offset address of each entry stored in the storage module. For example, the processing module 30 correspondingly stores the key information of each entry in the data table 1 and the offset address of each entry in the storage module, to obtain the second mapping relationship, where the second mapping relationship includes a mapping relationship between the first key information and a first offset address.

In this embodiment of this application, the processing module 30 may have a plurality of implementations. For example, the processing module 30 includes a switching module and a search module. The search module and the switching module cooperate to implement functions of the processing module 30. Alternatively, the processing module 30 includes a switching module, a search module, and a processor. The switching module, the search module, and the processor cooperate to implement the functions of the processing module 30. When the processing module 30 includes the switching module and the search module, the switching module and the search module are sequentially connected between the cache module 40 and the storage modules 1 to m, or the search module and the switching module are sequentially connected between the cache module 40 and the storage modules 1 to m. When the processing module 30 includes the switching module, the search module, and the processor, the processor, the switching module, and the search module are sequentially connected between the cache module 40 and the storage modules 1 to m, or the processor, the search module, and the switching module are sequentially connected between the cache module 40 and the storage modules 1 to m. The following describes, based on different processing modules 30, the data search apparatus provided in this embodiment of this application in four implementations.

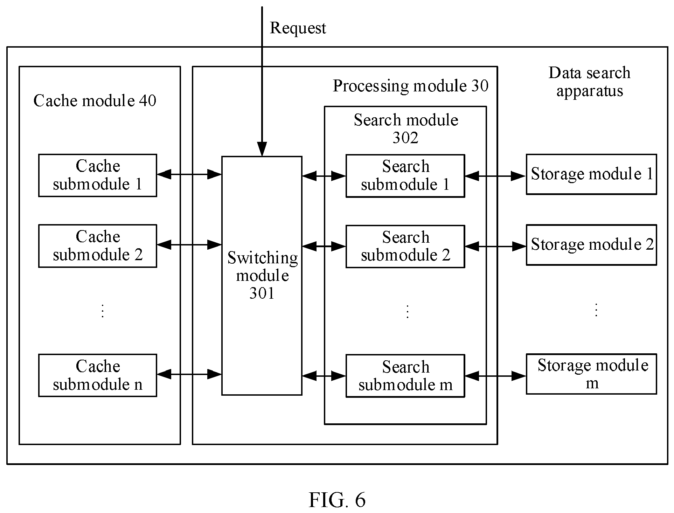

First implementation: As shown in FIG. 6, the processing module 30 includes a switching module 301 and a search module 302. The switching module 301 and the search module 302 are sequentially connected between the cache module 40 and the storage modules 1 to m. The switching module 301 is configured to determine a storage module that stores an entry in the data table 1. The search module 302 is configured to determine an entry in the data table 1 stored in the storage modules 1 to m. For example, the switching module 301 is configured to determine the first storage module based on the first key information carried in the first search request, and the search module 302 is configured to determine, based on the first key information, the first entry stored in the first storage module.

As shown in FIG. 6, the search module 302 includes a plurality of search submodules (where the first implementation is described using an example in which the plurality of search submodules are search submodules 1 to m), the switching module 301 is separately connected to the search submodules 1 to m and the cache submodules 1 to n, and the search submodules 1 to m are connected to the storage modules 1 to m in a one-to-one correspondence. The search submodules 1 to m are configured to determine the entry in the data table 1 stored in the storage modules 1 to m. For example, a search submodule 1 is configured to determine an entry in the data table 1 stored in a storage module 1, a search submodule 2 is configured to determine an entry in the data table 1 stored in a storage module 2, and so on. For example, after determining the first storage module (for example, the storage module 1) based on the first key information carried in the first search request, the switching module 301 performs transmission of the first key information with a first search submodule (for example, the search submodule 1) connected to the first storage module. The first search submodule is configured to determine, based on the first key information, the first entry stored in the first storage module.

In the first implementation, the switching module 301 may be further configured to: store a hot entry in the data table 1 in the cache module 40, determine whether an entry requested in a search request is stored in the cache module 40, and if the entry requested in the search request is stored in the cache module 40, determine the entry that is requested in the search request and that is stored in the cache module 40. In addition, the switching module 301 may be further configured to cache a search requirement of the search request. For example, after receiving the first search request, the switching module 301 determines, based on the first key information carried in the first search request, whether the first entry is stored in the first cache submodule (for example, the cache submodule 1). If the switching module 301 determines that the first entry is stored in the first cache submodule, the switching module 301 determines the first entry stored in the first cache submodule. If the switching module 301 determines that the first entry is not stored in the first cache submodule, the switching module 301 determines the first storage module based on the first key information. For example, after receiving the second search request, the switching module 301 determines, based on the second key information carried in the second search request, whether the second entry is stored in the second cache submodule (for example, the cache submodule 2). If the switching module 301 determines that the second entry is stored in the second cache submodule, the switching module 301 determines the second entry stored in the second cache submodule. If the switching module 301 determines that the second entry is not stored in the second cache submodule, the switching module 301 determines the first storage module based on the second key information, and caches the search requirement of the second search request in the switching module 301 based on that the storage module requested in the first search request is the same as the storage module requested in the second search request (where the two requested storage modules are the first storage module). The cache submodules 1 to n include the first cache submodule and the second cache submodule. The switching module 301 may further update, in a process of processing the search request, entries cached in the cache submodules 1 to n.

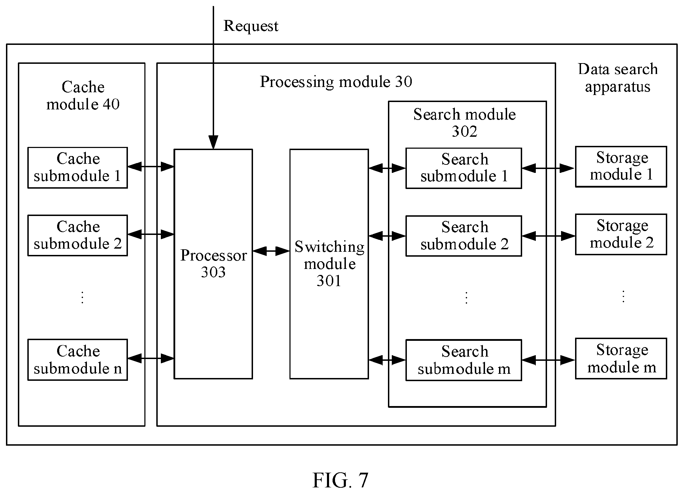

Second implementation: As shown in FIG. 7, the processing module 30 includes a switching module 301, a search module 302, and a processor 303. The processor 303, the switching module 301, and the search module 302 are sequentially connected between the cache module 40 and the storage modules 1 to m. The switching module 301 is configured to determine a storage module that stores an entry in the data table 1. The search module 302 is configured to determine an entry in the data table 1 stored in the storage modules 1 to m. For example, the search module 302 includes a plurality of search submodules (where the second implementation is described using an example in which the plurality of search submodules are search submodules 1 to m), the processor 303 is separately connected to the switching module 301 and the cache modules 1 to n, the switching module 301 is further separately connected to the search submodules 1 to m, and the search submodules 1 to m are connected to the storage modules 1 to m in a one-to-one correspondence. The search submodules 1 to m are configured to determine the entry in the data table 1 stored in the storage modules 1 to m. For example, a search submodule 1 is configured to determine an entry in the data table 1 stored in a storage module 1, a search submodule 2 is configured to determine an entry in the data table 1 stored in a storage module 2, and so on. The switching module 301 may be configured to determine the first storage module (for example, the storage module 1) based on the first key information carried in the first search request, and perform transmission of the first key information with a first search submodule (for example, the search submodule 1) connected to the first storage module. The first search submodule may be configured to determine, based on the first key information, the first entry stored in the first storage module.

In the second implementation, the processor 303 may be configured to: store a hot entry in the data table 1 in the cache module 40, determine whether an entry requested in a search request is stored in the cache module 40, and if the entry requested in the search request is stored in the cache module 40, determine the entry that is requested in the search request and that is stored in the cache module 40. The switching module 301 may be further configured to cache a search requirement of the search request. For example, after receiving the first search request, the processor 303 determines, based on the first key information carried in the first search request, whether the first entry is stored in the first cache submodule (for example, the cache submodule 1). If the processor 303 determines that the first entry is stored in the first cache submodule, the processor 303 determines the first entry stored in the first cache submodule. If the processor 303 determines that the first entry is not stored in the first cache submodule, the processor 303 performs transmission of the first key information with the switching module 301, and the switching module 301 determines the first storage module (for example, the storage module 1) based on the first key information. After receiving the second search request, the processor 303 determines, based on the second key information carried in the second search request, whether the second entry is stored in the second cache submodule (for example, the cache submodule 2). If the processor 303 determines that the second entry is stored in the second cache submodule, the processor 303 determines the second entry stored in the second cache submodule. If the processor 303 determines that the second entry is not stored in the second cache submodule, the processor 303 performs transmission of the second key information with the switching module 301, the switching module 301 determines the first storage module based on the second key information, and the switching module 301 caches the search requirement of the second search request in the switching module 301 based on that the storage module requested in the first search request is the same as the storage module requested in the second search request (where the two requested storage modules are the first storage module). The cache submodules 1 to n include the first cache submodule and the second cache submodule. The processor 303 may further update, in a process of processing the search request, entries cached in the cache submodules 1 to n. This is not limited in embodiments of this application.

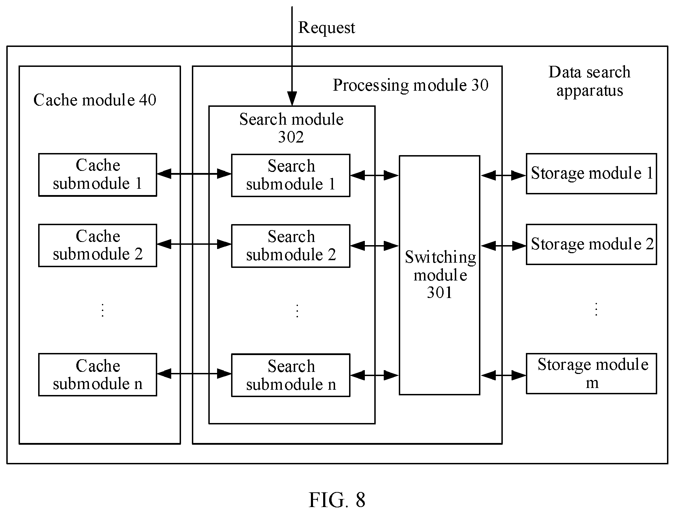

Third implementation: As shown in FIG. 8, the processing module 30 includes a switching module 301 and a search module 302. The search module 302 and the switching module 301 are sequentially connected between the cache module 40 and the storage modules 1 to m. The search module 302 is configured to: determine a storage module that stores an entry in the data table 1, and determine, through the switching module 301, an entry in the data table 1 stored in the storage modules 1 to m. For example, the search module 302 is configured to: determine the first storage module based on the first key information, and determine, through the switching module 301 based on the first key information, the first entry stored in the first storage module.

As shown in FIG. 8, the search module 302 includes a plurality of search submodules (where the third implementation is described using an example in which the plurality of search submodules are search submodules 1 to n), the switching module 301 is separately connected to the search submodules 1 to n and the storage modules 1 to m, and the search submodules 1 to n are connected to the cache submodules 1 to n in a one-to-one correspondence. The search submodules 1 to n are configured to determine the storage module that stores the entry in the data table 1, and determine, through the switching module 301, the entry in the data table 1 stored in the storage modules 1 to m. For example, a first search submodule (for example, a search submodule 1) determines the first storage module (for example, the storage module 1) based on the first key information carried in the first search request, and determines, through the switching module 301, the first entry stored in the first storage module. The search submodules 1 to n include the first search submodule. For example, the first search submodule is a search submodule that receives the first search request.

In the third implementation, the search module 302 is further configured to determine whether an entry requested in a search request is stored in the cache module 40, and if the entry requested in the search request is stored in the cache module 40, determine the entry that is requested in the search request and that is stored in the cache module 40. In addition, the switching module 301 may be further configured to cache a search requirement of the search request, or the search module 302 may be configured to cache the search requirement of the search request. For example, when each search submodule receives a plurality of search requests that need to be simultaneously processed by the search submodule and are used to request a same storage module, the search submodule may cache search requirements of the plurality of search requests in the search submodule, or the search submodule may cache the search requirements of the plurality of search requests in the switching module 301. For example, the first search request and the second search request are search requests that need to be simultaneously processed by the first search submodule (for example, the search submodule 1). After receiving the first search request, the first search submodule determines, based on the first key information carried in the first search request, whether the first entry is stored in the first cache submodule (for example, the cache submodule 1). If the first entry is stored in the first cache submodule, the first search submodule determines the first entry stored in the first cache submodule. If the first entry is not stored in the first cache submodule, the first search submodule determines, based on the first key information, the first storage module (for example, the storage module 1) and the first entry stored in the first storage module. In addition, after receiving the second search request, the first search submodule determines, based on the second key information carried in the second search request, whether the second entry is stored in the first cache submodule. If the second entry is stored in the first cache submodule, the first search submodule determines the second entry stored in the first cache submodule. If the second entry is not stored in the first cache submodule, the first search submodule determines the first storage module based on the second key information, and the first search submodule caches the search requirement of the second search request in the first search submodule or the switching module 301 based on that the storage module requested in the first search request is the same as the storage module requested in the second search request (where the two requested storage modules are the first storage module). The search submodules 1 to n include the first search submodule, the cache submodules 1 to n include the first cache submodule, and the search submodules 1 to n may further update, in a process of processing the search request, entries cached in the corresponding cache submodules 1 to n.

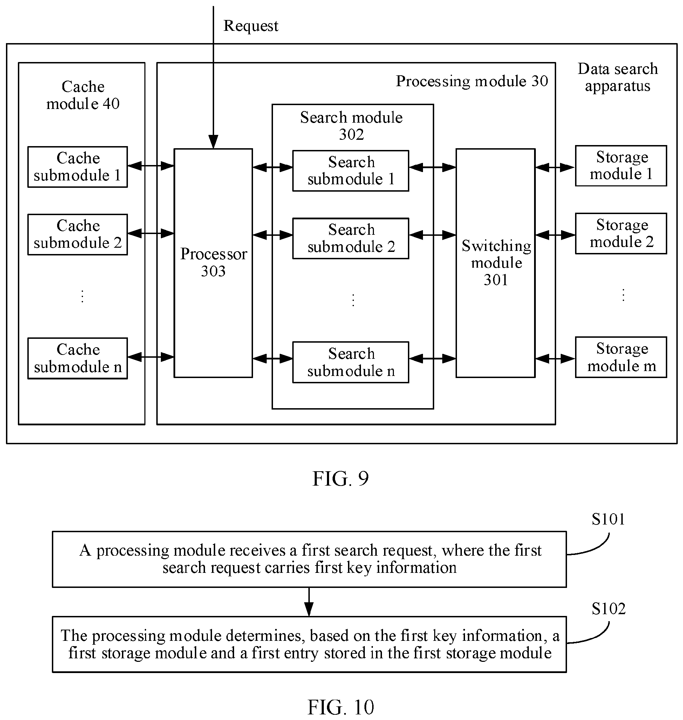

Fourth implementation: As shown in FIG. 9, the processing module 30 includes a switching module 301, a search module 302, and a processor 303. The processor 303, the search module 302, and the switching module 301 are sequentially connected between the cache module 40 and the storage modules 1 to m. The search module 302 is configured to determine a storage module that stores an entry in the data table 1, and determine, through the switching module 301, an entry in the data table 1 stored in the storage modules 1 to m. For example, the search module 302 is configured to: determine the first storage module (for example, the storage module 1) based on the first key information carried in the first search request, and determine, through the switching module 301 based on the first key information, the first entry stored in the first storage module.

As shown in FIG. 9, the search module 302 includes a plurality of search submodules (where the fourth implementation is described using an example in which the plurality of search submodules are search submodules 1 to n), the processor 303 is separately connected to the search submodules 1 to n and the cache modules 1 to n, the switching module 301 is separately connected to the search submodules 1 to n and the storage modules 1 to m, and the search submodules 1 to n and the cache submodules 1 to n are in a one-to-one correspondence. The search submodules 1 to n are configured to determine the storage module that stores the entry in the data table 1, and determine, through the switching module 301, the entry in the data table 1 stored in the storage modules 1 to m. For example, a first search submodule (for example, a search submodule 1) determines the first storage module based on the first key information carried in the first search request, and determines, through the switching module 301, the first entry stored in the first storage module. The search submodules 1 to n include the first search submodule.

In the fourth implementation, the processor 303 may be configured to: store a hot entry in the data table 1 in the cache module 40, determine whether the entry requested in the search request is stored in the cache module 40, and if the entry requested in the search request is stored in the cache module 40, determine the entry that is requested in the search request and that is stored in the cache module 40. The switching module 301 may be further configured to cache a search requirement of the search request, or the search module 302 may be configured to cache the search requirement of the search request. For example, for a plurality of search requests that need to be simultaneously processed by any search submodule and are used to request a same storage module, the search submodule may cache search requirements of the plurality of search requests in the search submodule, or the search submodule may cache the search requirements of the plurality of search requests in the switching module 301. For example, the first search request and the second search request are search requests that need to be simultaneously processed by the first search submodule (for example, the search submodule 1). After receiving the first search request, the processor 303 determines, based on the first key information carried in the first search request, whether the first entry is stored in the first cache submodule (for example, the cache submodule 1). If the first entry is stored in the first cache submodule, the processor 303 determines the first entry stored in the first cache submodule. If the first entry is not stored in the first cache submodule, the processor 303 performs transmission of the first key information with the first search submodule, and the first search submodule determines, based on the first key information, the first storage module (for example, the storage module 1) and the first entry stored in the first storage module. After receiving the second search request, the processor 303 determines, based on the second key information carried in the second search request, whether the second entry is stored in the first cache submodule. If the second entry is stored in the first cache submodule, the processor 303 determines the second entry stored in the first cache submodule. If the second entry is not stored in the first cache submodule, the processor 303 performs transmission of the second key information with the first search submodule, and the first search submodule determines the first storage module based on the second key information, and caches the search requirement of the second search request in the first search submodule or the switching module 301 based on that the storage module requested in the first search request is the same as the storage module requested in the second search request (where the two requested storage modules are the first storage module). The search submodules 1 to n include the first search submodule, and the cache submodules 1 to n include the first cache submodule. The processor 303 may further update, in a process of processing the search request, entries cached in the cache submodules 1 to n. This is not limited in embodiments of this application.

In this embodiment of this application, the search submodule may also be referred to as a search engine (search engine). In the data search apparatuses shown in FIG. 6 and FIG. 7, existence of the switching module 301 enables an entry stored in any one of the storage modules 1 to m to be requested in any search request received by the data search apparatus, and the data search apparatus can simultaneously process search requests for accessing at least two of the storage modules 1 to m. In the data search apparatuses shown in FIG. 8 and FIG. 9, the switching module 301 provides communication channels between the search submodules 1 to n and the storage modules 1 to m, so that any one of the search submodules 1 to n can access any one of the storage modules 1 to m, the storage modules 1 to m can be simultaneously accessed by at least one of the search submodules 1 to n, and the data search apparatus can simultaneously process search requests for accessing at least two of the storage modules 1 to m.

In an optional embodiment, a network device includes an NP chip, where the NP chip includes the data search apparatus. That is, the data search apparatus belongs to the NP chip. Because the plurality of storage modules included in the data search apparatus are configured to store the same data table, and any one of the plurality of storage modules stores a part of entries of the data table, overheads of storage resources of the NP chip are reduced, an area of the NP chip is reduced, and costs of the NP chip are reduced.

In conclusion, according to the data search apparatus provided in this embodiment of this application, the data search apparatus includes the plurality of storage modules, the plurality of storage modules are configured to store the data table, the any one of the plurality of storage modules stores the part of entries of the data table, and storage addresses of entries stored in at least one of the plurality of storage modules are inconsecutive. Therefore, in most cases, there is a low probability that entries requested in a plurality of search requests processed in parallel by the data search apparatus are located in a same storage module. This helps reduce a probability of a conflict in a process of processing the plurality of search requests in parallel by the data search apparatus. For example, a probability of a conflict in a parallel search process performed by the data search apparatus is reduced, thereby reducing difficulty of parallel data search.

The foregoing describes the data search apparatuses in this application, and the following describes embodiments of data search methods in this application.

The data search method in this embodiment of this application is applicable to the foregoing data search apparatus. The data search apparatus is applied to the network device. The data search apparatus includes the processing module and the plurality of storage modules. The plurality of storage modules are configured to store the data table (for example, the data table 1), the any one of the plurality of storage modules stores the part of entries of the data table 1, any entry in the data table 1 is unique in the plurality of storage modules, and the storage addresses of the entries stored in the at least one of the plurality of storage modules are inconsecutive. For a specific structure of the data search apparatus, refer to the embodiments shown in FIG. 3 to FIG. 9.

FIG. 10 is a flowchart of a data search method according to an embodiment of this application. The data search method includes the following steps S101 and S102.

S101: A processing module receives a first search request, where the first search request carries first key information.

S102: The processing module determines, based on the first key information, a first storage module and a first entry stored in the first storage module.

A plurality of storage modules include the first storage module, a data table 1 includes a first entry, and the first key information may be key information of the first entry. In S102, the processing module may first determine the first storage module based on the first key information, and then determine, based on the first key information, the first entry stored in the first storage module.

Optionally, the processing module maintains a first mapping relationship. The first mapping relationship includes a mapping relationship between the first key information and an identifier of the first storage module. The processing module may determine the first storage module based on the first key information and the first mapping relationship. For example, the first mapping relationship is a mapping table. The processing module searches for the first mapping relationship based on the first key information, to determine the identifier of the first storage module corresponding to the first key information, and then determines the first storage module based on the identifier of the first storage module.

Optionally, that the processing module determines, based on the first key information, a first entry stored in the first storage module includes: The processing module determines a first storage address based on the first key information, where the first storage address indicates a storage location of the first entry in the first storage module. For example, the processing module determines a first offset address based on the first key information, and determines the first storage address based on the first offset address. After determining the first storage address, the processing module may determine, based on the first storage address, the first entry stored in the first storage module. The first storage address may be a physical address.

In an example of this application, the processing module maintains a second mapping relationship, and the second mapping relationship includes a mapping relationship between the first key information and the first offset address. The processing module may determine the first offset address based on the first key information and the second mapping relationship, and determine the first storage address based on an initial address (where the initial address is a physical address) of the first storage module and the first offset address. For example, the processing module adds the initial address of the first storage module and the first offset address to obtain the first storage address.

In an optional embodiment, the data search apparatus in this application further includes a cache module, where the cache module is configured to store an entry with access frequency greater than a frequency threshold in the data table 1. Before S102, the processing module may determine, based on the first key information, whether the first entry is stored in the cache module. If the processing module determines that the first entry is stored in the cache module, the processing module determines the first entry stored in the cache module. If the processing module determines that the first entry is not stored in the cache module, the processing module performs S102. For example, the first search request is a read request. If the first entry is stored in the cache module, the processing module directly reads the first entry stored in the cache module.

In this embodiment of this application, the processing module may include a switching module and a search module. Functions of the switching module and the search module vary with a connection relationship of the switching module, the search module, and the plurality of storage modules. For example, as shown in FIG. 6 and FIG. 7, the search module is connected between the switching module and the storage modules 1 to m, the switching module may determine the first storage module based on the first key information, and the search module may determine, based on the first key information, the first entry stored in the first storage module. For example, after determining the first storage module, the switching module performs transmission of the first key information with the first search submodule connected to the first storage module, and the first search submodule determines, based on the first key information, the first entry stored in the first storage module. For example, as shown in FIG. 8 and FIG. 9, the switching module is connected between the search module and the storage modules 1 to m, and the search module may determine, based on the first key information, the first storage module and the first entry stored in the first storage module. For the data search apparatuses shown in FIG. 8 and FIG. 9, the switching module may perform transparent transmission of information between the search module and the storage modules 1 to m, and a function of the switching module is to provide the communication channels between the search module and the storage modules 1 to m.

In this embodiment of this application, the processing module may further include a processor. For the data search apparatus shown in FIG. 6, the switching module may determine, based on the first key information carried in the first search request, whether the first entry is stored in the cache module. If the first entry is stored in the cache module, the switching module determines the first entry stored in the cache module. For example, the switching module determines, based on the first key information, whether the first entry is stored in the first cache submodule. If the switching module determines that the first entry is stored in the first cache submodule, the switching module determines the first entry stored in the first cache submodule. If the switching module determines that the first entry is not stored in the first cache submodule, the switching module determines the first storage module based on the first key information. For the data search apparatus shown in FIG. 7, the processor may determine, based on the first key information carried in the first search request, whether the first entry is stored in the cache module. If the first entry is stored in the cache module, the processor determines the first entry stored in the cache module. For example, the processor determines, based on the first key information, whether the first entry is stored in the first cache submodule. If the processor determines that the first entry is stored in the first cache submodule, the processor determines the first entry stored in the first cache submodule. If the processor determines that the first entry is not stored in the first cache submodule, the processor performs transmission of the first key information with the switching module, and the switching module determines the first storage module based on the first key information. For the data search apparatus shown in FIG. 8, the search module may determine, based on the first key information carried in the first search request, whether the first entry is stored in the cache module. If the first entry is stored in the cache module, the search module determines the first entry stored in the cache module. For example, the search module (for example, the first search submodule) determines, based on the first key information, whether the first entry is stored in the first cache submodule. If the search module determines that the first entry is stored in the first cache submodule, the search module determines the first entry stored in the first cache submodule. If the search module determines that the first entry is not stored in the first cache submodule, the search module determines, based on the first key information, the first storage module and the first entry stored in the first storage module. For the data search apparatus shown in FIG. 9, the processor may determine, based on the first key information carried in the first search request, whether the first entry is stored in the cache module. If the first entry is stored in the cache module, the processor determines the first entry stored in the cache module. For example, the processor determines, based on the first key information, whether the first entry is stored in the first cache submodule. If the processor determines that the first entry is stored in the first cache submodule, the processor determines the first entry stored in the first cache submodule. If the processor determines that the first entry is not stored in the first cache submodule, the processor performs transmission of the first key information with the search module (for example, the first search submodule), and the search module determines, based on the first key information, the first storage module and the first entry stored in the first storage module.

In an optional embodiment, the processing module needs to simultaneously process a plurality of search requests. If the processing module determines that storage modules requested in the plurality of search requests are the same, the processing module may cache search requirements of the plurality of search requests. Then, the processing module may schedule and process the plurality of search requests according to a scheduling algorithm. Because only one search operation (for example, a read/write operation) is usually allowed to be performed on a same storage module at a same moment or in a same cycle, the processing module caches the search requirements of the plurality of search requests, so that a conflict between processing processes of the plurality of search requests can be avoided.

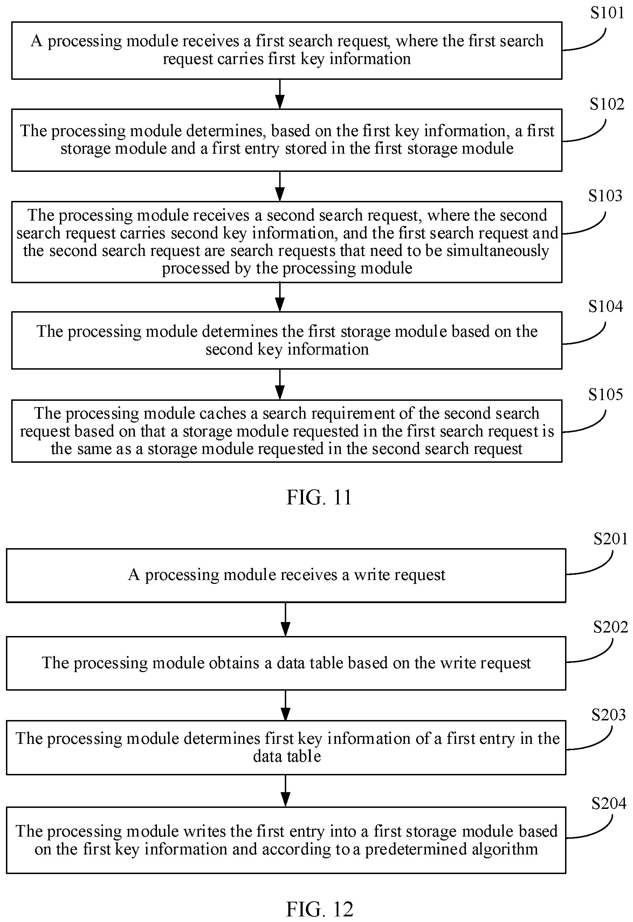

For example, FIG. 11 is a flowchart of another data search method according to an embodiment of this application. As shown in FIG. 11, based on FIG. 10, the data search method further includes the following steps S103 to S105.

S103: A processing module receives a second search request, where the second search request carries second key information, and a first search request and the second search request are search requests that need to be simultaneously processed by the processing module.

The first search request and the second search request may be search requests received by the processing module at a same moment. For example, the first search request and the second search request are search requests received by the processing module at the same moment through different interfaces. Alternatively, the first search request and the second search request may be search requests received by the processing module in a same cycle.

S104: The processing module determines a first storage module based on the second key information.

For example, the processing module determines the first storage module based on the second key information and a first mapping relationship.

Optionally, an entry requested in the second search request is a second entry in a data table 1. Before S104, the processing module may determine, based on the second key information, whether the second entry is stored in a cache module. If the processing module determines that the second entry is stored in the cache module, the processing module determines the second entry stored in the cache module. If the processing module determines that the second entry is not stored in the cache module, the processing module performs S104.

S105: The processing module caches a search requirement of the second search request based on that a storage module requested in the first search request is the same as a storage module requested in the second search request.

After the processing module determines the first storage module based on the second key information, the processing module determines that the storage module requested in the second search request is the first storage module. Because the storage module requested in the first search request is also the first storage module, the processing module determines that the storage module requested in the first search request is the same as the storage module requested in the second search request. Because only one search operation is allowed to be performed on a same storage module at a same moment or in a same cycle, to avoid a conflict between a processing process of the first search request and a processing process of the second search request, the processing module caches the search requirement of the second search request.

Optionally, for the data search apparatuses shown in FIG. 6 and FIG. 7, the switching module may perform S104 and S105. For the data search apparatuses shown in FIG. 8 and FIG. 9, the search module may perform S104 and S105.

In an optional embodiment, before searching the plurality of storage modules for an entry of the data table 1 based on a search request, the processing module may first store the data table 1 in the plurality of storage modules. In an example, FIG. 12 is a flowchart of a method for storing a data table in a plurality of storage modules by a processing module according to an embodiment of this application. As shown in FIG. 12, the method includes the following steps S201 to S204.

S201: A processing module receives a write request.

S202: The processing module obtains the data table based on the write request.

Optionally, the write request carries indication information of the data table, and the processing module obtains the data table based on the indication information of the data table. The indication information of the data table may be an identifier, a name, a storage location, or the like of the data table.

S203: The processing module determines first key information of a first entry in the data table.

Optionally, the first entry includes the first key information, and the processing module determines the first key information included in the first entry. For example, the data table 1 is a packet forwarding table, an entry in the packet forwarding table 1 is a forwarding entry, the forwarding entry may include a packet address and a port identifier, and key information of the forwarding entry may be the packet address included in the forwarding entry.

Alternatively, the processing module generates the first key information based on the first entry. For example, the first key information is a hash value of the first entry, and the processing module generates the hash value of the first entry.

S204: The processing module writes the first entry into a first storage module based on the first key information and according to a predetermined algorithm.

Optionally, the processing module determines, based on the first key information and according to the predetermined algorithm, an identifier of the first storage module that can be used to store the first entry, determines the first storage module based on the identifier of the first storage module, and writes the first entry into the first storage module. The predetermined algorithm is used to make storage addresses of entries written into at least one of the plurality of storage modules inconsecutive.

The predetermined algorithm includes one of a hash algorithm and a random algorithm. For example, the predetermined algorithm is the hash algorithm. The processing module may calculate a hash value of the first key information, and determine, based on the hash value of the first key information, the identifier of the first storage module that can be used to store the first entry. For example, the processing module determines the hash value of the first key information as the identifier of the first storage module that can be used to store the first entry. Alternatively, the processing module may determine a remainder of the hash value of the first key information as the identifier of the first storage module that can be used to store the first entry. Alternatively, the processing module may determine values of fixed bits of the hash value of the first key information as the identifier of the first storage module that can be used to store the first entry.

S203 and S204 are described using an example in which the processing module stores the first entry in the data table. For each entry in the data table, the processing module may write the entry into a storage module according to the method provided in S203 and S204. After storing the data table into the plurality of storage modules, the processing module may further generate a first mapping relationship based on key information of each entry in the data table and an identifier of a storage module in which each entry in the data table is located, where the first mapping relationship includes a mapping relationship between the first key information and the identifier of the first storage module. In addition, the processing module may further generate a second mapping relationship based on the key information of each entry in the data table and an offset address of each entry stored in the storage module, where the second mapping relationship includes the first key information and a first offset address (an offset address of the first entry in the first storage module).

Content of the data search method in this application has been described in detail in the foregoing embodiments of the data search apparatus, and therefore is not described in detail in this embodiment of the data search method. For details that are not described in this embodiment of the data search method, refer to the foregoing embodiments of the data search apparatus.

An embodiment of this application further provides a network device. The network device includes the data search apparatus provided in the foregoing embodiments. The network device may be any network device in a network. For example, according to a device type, the network device may be a switch, a router, or the like. According to a device deployment location, the network device may be an edge network device, a core network device, or a network device in a data center. For example, the edge network device may be a provider edge (provider edge, PE) device, and the core network device may be a provider (provider, P) device.

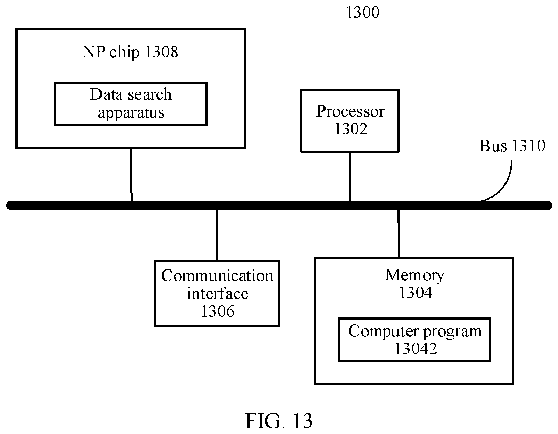

For example, FIG. 13 is a diagram of a structure of a network device 1300 according to an embodiment of this application. The network device 1300 includes a processor 1302, a memory 1304, a communication interface 1306, a data search apparatus, and a bus 1310. For example, the network device 1300 includes an NP chip 1308, where the NP chip 1308 includes the data search apparatus. The processor 1302, the memory 1304, the communication interface 1306, and the NP chip 1308 are communicatively connected to each other through the bus 1310. A connection manner between the processor 1302, the memory 1304, the communication interface 1306, and the NP chip 1308 shown in FIG. 13 is merely an example. In an implementation process, alternatively, the processor 1302, the memory 1304, the communication interface 1306, and the NP chip 1308 may be communicatively connected to each other in another connection manner other than using the bus 1310.

The memory 1304 is configured to store a computer program 13042. The computer program 13042 may include instructions and data. The memory 1304 may be various types of storage media, for example, a random access memory (random access memory, RAM), a read-only memory (read-only memory, ROM), a non-volatile RAM (non-volatile RAM, NVRAM), a programmable ROM (programmable ROM, PROM), an erasable PROM (erasable PROM, EPROM), an electrically erasable PROM (electrically erasable PROM, EEPROM), a flash memory, an optical memory, a register, or the like.

The processor 1302 may be a general-purpose processor. The general-purpose processor may be a processor that reads and executes a computer program (for example, the computer program 13042) stored in a memory (for example, the memory 1304) to perform a specific step and/or operation. In a process of performing the step and/or operation, the general-purpose processor may use data stored in the memory (for example, the memory 1304). The general-purpose processor may be, for example, but is not limited to, a central processing unit (central processing unit, CPU). In addition, the processor 1302 may alternatively be a dedicated processor. The dedicated processor may be a processor specially designed to perform a specific step and/or operation. The dedicated processor may be, for example, but is not limited to, an application-specific integrated circuit (application-specific integrated circuit, ASIC), a field programmable gate array (field programmable gate array, FPGA), a network processor (network processor, NP), or generic array logic (generic array logic, GAL), or the like. In addition, the processor 1302 may alternatively be a combination of a plurality of processors, for example, a multi-core processor.

The communication interface 1306 may include interfaces such as an input/output (input/output, I/O) interface, a physical interface, and a logical interface configured to interconnect components inside the network device 1300, and an interface configured to interconnect the network device 1300 and another device (for example, a network device). The physical interface may be a gigabit Ethernet (gigabit Ethernet, GE) interface, and may be configured to interconnect the network device 1300 and another device. The logical interface is an interface inside the network device 1300, and the logical interface may be configured to interconnect components inside the network device 1300. It is easy to understand that the communication interface 1306 may be used by the network device 1300 to communicate with another device. For example, a packet is sent and received between the network device 1300 and the another device through the communication interface 1306.

The NP chip 1308 may include a programmable logic circuit and/or program instructions. For a structure of the data search apparatus, refer to the embodiments shown in FIG. 3 to FIG. 9. Details are not described herein again. The bus 1310 may be any type of communication bus, for example, a system bus, configured to interconnect the processor 1302, the memory 1304, the communication interface 1306, and the NP chip 1308.

Interconnection between the NP chip 1308 and any component in the processor 1302, the memory 1304, and the communication interface 1306 may specifically refer to interconnection between the component and a component in the NP chip 1308. The network device 1300 shown in FIG. 13 is merely an example. In an implementation process, the network device 1300 may further include other components, which are not enumerated one by one in this specification.

All or some of the foregoing embodiments may be implemented using software, hardware, firmware, or any combination thereof. When the software is used for implementation, all or some of the embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a computer network, or another programmable apparatus. The computer instructions may be stored in a computer-readable storage medium, or transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage apparatus, such as a server or a data center, integrating one or more usable media. The usable medium may be a magnetic medium (for example, a floppy disk, a hard disk, or a magnetic tape), an optical medium, a semiconductor medium (for example, a solid-state drive), or the like.

It should be understood that the term "at least one" in this application means one or more, and the term "a plurality of" means two or more. In this application, unless otherwise specified, the symbol "/" means or. For example, A/B represents A or B. The term "and/or" in this application describes only an association relationship between associated objects and represents that three relationships may exist. For example, A and/or B may represent the following three cases: Only A exists, both A and B exist, and only B exists. In addition, for ease of clear description, in this application, terms such as "first", "second", and "third" are used for distinguishing between same items or similar items having basically same functions and effects. The terms such as "first", "second", and "third" do not limit a quantity and an execution sequence.

Different types of embodiments such as the method embodiments and the apparatus embodiments provided in embodiments of this application may be cross-referenced. A sequence of the steps of the method embodiment provided in embodiments of this application can be properly adjusted, and the steps can be correspondingly added or deleted based on a situation. Any modified method that can be easily figured out by a person skilled in the art without departing from a technical scope disclosed in this application shall fall within the protection scope of this application, and therefore details are not described again.

In the corresponding embodiments provided in this application, the disclosed apparatus and the like may be implemented in other composition manners. For example, the described apparatus embodiment is merely an example. For example, division into the units is merely logical function division and may be another division manner during actual implementation. For example, a plurality of units or components are combined or integrated into another system, or some features may be ignored or not performed. The units described as separate parts may or may not be physically separate, and parts described as units may or may not be physical units, and may be located in one position or may be located in different positions. Some or all of the units may be selected based on actual needs to achieve the objectives of the solutions of embodiments.

## Claims

1. **A data** search apparatus, wherein the data search apparatus is applied to a network device, and the data search apparatus comprises a plurality of storage modules (1, 2...m),
∘ wherein the plurality of storage modules (1, 2...m) are configured to store a data table, any one of the plurality of storage modules (1, 2...m) stores a part of entries of the data table, any entry in the data table is unique in the plurality of storage modules (1, 2...m), and storage addresses of entries stored in at least one of the plurality of storage modules (1, 2...m) are inconsecutive, wherein a storage address indicates a storage location of an entry in a specific storage module,
∘ wherein the data search apparatus further comprises a processing module (30), wherein the processing module (30) is connected to the plurality of storage modules (1, 2...m); and
∘ the processing module (30) is configured to determine, based on first key information carried in a first search request, a first storage module and a first entry stored in the first storage module, wherein the plurality of storage modules (1, 2...m) comprise the first storage module, the data table comprises the first entry, and the first search request is a search request received by the processing module (30),
∘ wherein the processing module (30) is further configured to:
▪ receive a second search request, wherein the second search request carries second key information, and the first search request and the second search request are search requests that need to be simultaneously processed by the processing module (30);
▪ determine the first storage module based on the second key information; and
▪ cache a search requirement of the second search request in a cache space of the processing module (30) based on that a storage module requested in the first search request is the same as a storage module requested in the second search request, and continue to process the second search request after completing processing of the first search request.

2. The data search apparatus according to claim 1, wherein the first storage module is determined further based on a first mapping relationship, wherein the first mapping relationship comprises a mapping relationship between the first key information and an identifier of the first storage module.

3. The data search apparatus according to claim 1 or 2, wherein the processing module (30) is configured to determine a first storage address based on the first key information, wherein the first storage address indicates a storage location of the first entry in the first storage module.

4. The data search apparatus according to any one of claims 1 to 3, wherein the processing module (30) is further configured to:
∘ obtain the data table based on a write request, wherein the write request is a write request received by the processing module (30);
∘ determine the first key information of the first entry in the data table; and
∘ write the first entry into the first storage module based on the first key information and according to a predetermined algorithm, wherein the predetermined algorithm is used to make storage addresses of entries written into the at least one of the plurality of storage modules (1, 2...m) inconsecutive.

5. The data search apparatus according to claim 4, wherein the predetermined algorithm comprises one of a hash algorithm and a random algorithm.

6. The data search apparatus according to claim 4 or 5, wherein the processing module (30) is further configured to generate the first mapping relationship, wherein the first mapping relationship comprises the mapping relationship between the first key information and the identifier of the first storage module.

7. The data search apparatus according to any one of claims 1 to 6, wherein the data search apparatus further comprises a cache module (40), wherein the cache module (40) is connected to the processing module (30);
the cache module (40) is configured to store an entry with access frequency greater than a frequency threshold in the data table; and
the processing module (30) is further configured to determine, based on the first key information carried in the first search request, that the first entry is not stored in the cache module (40).

8. The data search apparatus according to any one of claims 1 to 6, wherein the processing module (30) comprises a switching module (301) and a plurality of search submodules, wherein the switching module (301) is connected to the plurality of search submodules, and the plurality of search submodules are connected to the plurality of storage modules (1, 2...m) in a one-to-one correspondence;
the switching module (301) is configured to determine a storage module that stores an entry in the data table; and
the plurality of search submodules are configured to determine an entry in the data table stored in the plurality of storage modules (1, 2...m).

9. The data search apparatus according to claim 8, wherein the switching module (301) is configured to determine the first storage module based on the first key information; and
a first search submodule is configured to determine, based on the first key information, the first entry stored in the first storage module, wherein the plurality of search submodules comprise the first search submodule.

10. A network device, comprising the data search apparatus according to any one of claims 1 to 9.

11. A data search method, applied to a data search apparatus, wherein the data search apparatus comprises a processing module and a plurality of storage modules, wherein the plurality of storage modules are configured to store a data table, any one of the plurality of storage modules stores a part of entries of the data table, any entry in the data table is unique in the plurality of storage modules, and storage addresses of entries stored in at least one of the plurality of storage modules are inconsecutive, wherein a storage address indicates a storage location of an entry in a specific storage module; and the method comprises:
∘ receiving (S101), by the processing module, a first search request, wherein the first search request carries first key information; and
∘ determining (S102), by the processing module based on the first key information, a first storage module and a first entry stored in the first storage module, wherein the plurality of storage modules comprise the first storage module, and the data table comprises the first entry,
∘ receiving, by the processing module, a second search request, wherein the second search request carries second key information, and the first search request and the second search request are search requests that need to be simultaneously processed by the processing module,
∘ determining, by the processing module, the first storage module based on the second key information; and
∘ caching, by the processing module, a search requirement of the second search request in a cache space of the processing module based on that a storage module requested in the first search request is the same as a storage module requested in the second search request, and continuing, by the processing module, to process the second search request after completing processing of the first search request.

12. The method according to claim 11, wherein the determining (S102), by the processing module based on the first key information, the first storage module comprises:
∘ determining, by the processing module, the first storage module based on the first key information and a first mapping relationship, wherein the first mapping relationship comprises a mapping relationship between the first key information and an identifier of the first storage module.

13. The method according to claim 11 or 12, wherein the determining, by the processing module based on the first key information, the first entry stored in the first storage module comprises:
∘ determining, by the processing module, a first storage address based on the first key information, wherein the first storage address indicates a storage location of the first entry in the first storage module.

14. The method according to any one of claims 11 to 13, wherein the method further comprises:
∘ obtaining, by the processing module, the data table based on a write request, wherein the write request is a write request received by the processing module;
∘ determining, by the processing module, the first key information of the first entry in the data table; and
∘ writing, by the processing module, the first entry into the first storage module based on the first key information and according to a predetermined algorithm, wherein the predetermined algorithm is used to make storage addresses of entries written into the at least one of the plurality of storage modules inconsecutive.

15. The method according to claim 14, wherein the predetermined algorithm comprises one of a hash algorithm and a random algorithm.

16. The method according to claim 14 or 15, wherein the method further comprises:
∘ generating, by the processing module, the first mapping relationship, wherein the first mapping relationship comprises the mapping relationship between the first key information and the identifier of the first storage module.

17. The method according to any one of claims 12 to 16, wherein the data search apparatus further comprises a cache module, wherein the cache module is configured to store an entry with access frequency greater than a frequency threshold in the data table; and
the determining, by the processing module based on the first key information, the first storage module and a first entry stored in the first storage module comprises:
∘ determining, by the processing module, that the first entry is not stored in the cache module; and determining, by the processing module based on the first key information, the first storage module and the first entry stored in the first storage module.

## Patentansprüche

1. Datensuchvorrichtung, wobei die Datensuchvorrichtung auf eine Netzwerkvorrichtung angewendet wird und die Datensuchvorrichtung eine Vielzahl von Speichermodulen (1, 2...m) umfasst,
∘ wobei die Vielzahl von Speichermodulen (1, 2...m) konfiguriert ist, um eine Datentabelle zu speichern, ein beliebiges der Vielzahl von Speichermodulen (1, 2...m) einen Teil von Einträgen der Datentabelle speichert, ein beliebiger Eintrag in der Datentabelle in der Vielzahl von Speichermodulen (1, 2...m) eindeutig ist, und Speicheradressen von Einträgen, die in mindestens einem der Vielzahl von Speichermodulen (1, 2...m) gespeichert sind, nicht aufeinanderfolgend sind, wobei eine Speicheradresse einen Speicherort eines Eintrags in einem spezifischen Speichermodul angibt,
∘ wobei die Datensuchvorrichtung ferner ein Verarbeitungsmodul (30) umfasst, wobei das Verarbeitungsmodul (30) mit der Vielzahl von Speichermodulen (1, 2...m) verbunden ist; und
∘ das Verarbeitungsmodul (30) konfiguriert ist, um, basierend auf ersten Schlüsselinformationen, die in einer ersten Suchanforderung enthalten sind, ein erstes Speichermodul und einen ersten Eintrag, der in dem ersten Speichermodul gespeichert ist, zu bestimmen, wobei die Vielzahl von Speichermodulen (1, 2...m) das erste Speichermodul umfasst, die Datentabelle den ersten Eintrag umfasst und die erste Suchanforderung eine Suchanforderung, die durch das Verarbeitungsmodul (30) empfangen wird, ist,
∘ wobei das Verarbeitungsmodul (30) ferner konfiguriert ist zum:
▪ Empfangen einer zweiten Suchanforderung, wobei die zweite Suchanforderung zweite Schlüsselinformationen enthält, und die erste Suchanforderung und die zweite Suchanforderung Suchanforderungen, die gleichzeitig durch das Verarbeitungsmodul (30) verarbeitet werden müssen, sind;
▪ Bestimmen des ersten Speichermoduls basierend auf den zweiten Schlüsselinformationen; und
▪ Zwischenspeichern einer Suchanforderung der zweiten Suchanforderung in einem Zwischenspeicherraum des Verarbeitungsmoduls (30), basierend darauf, dass ein Speichermodul, das in der ersten Suchanforderung angefordert wird, dasselbe wie ein Speichermodul, das in der zweiten Suchanforderung angefordert wird, ist, und Fortsetzen des Verarbeitens der zweiten Suchanforderung nach Abschließen des Verarbeitens der ersten Suchanforderung.

2. Datensuchvorrichtung nach Anspruch 1, wobei das erste Speichermodul ferner basierend auf einer ersten Mapping-Beziehung bestimmt wird, wobei die erste Mapping-Beziehung eine Mapping-Beziehung zwischen den ersten Schlüsselinformationen und einer Kennung des ersten Speichermoduls umfasst.

3. Datensuchvorrichtung nach Anspruch 1 oder 2, wobei das Verarbeitungsmodul (30) konfiguriert ist, um basierend auf den ersten Schlüsselinformationen eine erste Speicheradresse zu bestimmen, wobei die erste Speicheradresse einen Speicherort des ersten Eintrags in dem ersten Speichermodul angibt.

4. Datensuchvorrichtung nach einem der Ansprüche 1 bis 3, wobei das Verarbeitungsmodul (30) ferner konfiguriert ist zum:
∘ Erhalten der Datentabelle basierend auf einer Schreibanforderung, wobei die Schreibanforderung eine Schreibanforderung, die durch das Verarbeitungsmodul (30) empfangen wird, ist;
∘ Bestimmen der ersten Schlüsselinformationen des ersten Eintrags in der Datentabelle; und
∘ Schreiben des ersten Eintrags in das erste Speichermodul basierend auf den ersten Schlüsselinformationen und gemäß einem vorbestimmten Algorithmus, wobei der vorbestimmte Algorithmus verwendet wird, um Speicheradressen von Einträgen, die in das mindestens eine der Vielzahl von Speichermodulen (1, 2...m) geschrieben werden, nicht aufeinanderfolgend zu machen.

5. Datensuchvorrichtung nach Anspruch 4, wobei der vorbestimmte Algorithmus einen von einem Hash-Algorithmus und einem Zufallsalgorithmus umfasst.

6. Datensuchvorrichtung nach Anspruch 4 oder 5, wobei das Verarbeitungsmodul (30) ferner konfiguriert ist, um die erste Mapping-Beziehung zu erzeugen, wobei die erste Mapping-Beziehung die Mapping-Beziehung zwischen den ersten Schlüsselinformationen und der Kennung des ersten Speichermoduls umfasst.

7. Datensuchvorrichtung nach einem der Ansprüche 1 bis 6, wobei die
Datensuchvorrichtung ferner ein Zwischenspeichermodul (40) umfasst, wobei das Zwischenspeichermodul (40) mit dem Verarbeitungsmodul (30) verbunden ist;
das Zwischenspeichermodul (40) konfiguriert ist, um einen Eintrag mit einer Zugriffsfrequenz, die größer als ein Frequenzschwellenwert ist, in der Datentabelle zu speichern; und
das Verarbeitungsmodul (30) ferner konfiguriert ist, um, basierend auf den ersten Schlüsselinformationen, die in der ersten Suchanforderung enthalten sind, zu bestimmen, dass der erste Eintrag nicht in dem Zwischenspeichermodul (40) gespeichert ist.

8. Datensuchvorrichtung nach einem der Ansprüche 1 bis 6, wobei das
Verarbeitungsmodul (30) ein Schaltmodul (301) und eine Vielzahl von Suchuntermodulen umfasst, wobei das Schaltmodul (301) mit der Vielzahl von Suchuntermodulen verbunden ist und die Vielzahl von Suchuntermodulen mit der Vielzahl von Speichermodulen (1, 2...m) in einer Eins-zu-Eins-Entsprechung verbunden ist;
das Schaltmodul (301) konfiguriert ist, um ein Speichermodul, das einen Eintrag in der Datentabelle speichert, zu bestimmen; und
die Vielzahl von Suchuntermodulen konfiguriert ist, um einen Eintrag in der Datentabelle, die in der Vielzahl von Speichermodulen (1, 2...m) gespeichert ist, zu bestimmen.

9. Datensuchvorrichtung nach Anspruch 8, wobei das Schaltmodul (301) konfiguriert ist, um das erste Speichermodul basierend auf den ersten Schlüsselinformationen zu bestimmen; und
ein erstes Suchuntermodul konfiguriert ist, um basierend auf den ersten Schlüsselinformationen den ersten Eintrag, der in dem ersten Speichermodul gespeichert ist, zu bestimmen, wobei die Vielzahl von Suchuntermodulen das erste Suchuntermodul umfasst.

10. Netzwerkvorrichtung, die die Datensuchvorrichtung nach einem der Ansprüche 1 bis 9 umfasst.

11. Datensuchverfahren, das auf eine Datensuchvorrichtung angewendet wird, wobei die Datensuchvorrichtung ein Verarbeitungsmodul und eine Vielzahl von Speichermodulen umfasst, wobei die Vielzahl von Speichermodulen konfiguriert ist, um eine Datentabelle zu speichern, ein beliebiges der Vielzahl von Speichermodulen einen Teil von Einträgen der Datentabelle speichert, ein beliebiger Eintrag in der Datentabelle in der Vielzahl von Speichermodulen eindeutig ist, und Speicheradressen von Einträgen, die in mindestens einem der Vielzahl von Speichermodulen gespeichert sind, nicht aufeinanderfolgend sind, wobei eine Speicheradresse einen Speicherort eines Eintrags in einem spezifischen Speichermodul angibt; und das Verfahren umfasst:
∘ Empfangen (S101), durch das Verarbeitungsmodul, einer ersten Suchanforderung, wobei die erste Suchanforderung erste Schlüsselinformationen enthält; und
∘ Bestimmen (S102), durch das Verarbeitungsmodul basierend auf den ersten Schlüsselinformationen, eines ersten Speichermoduls und eines ersten Eintrags, der in dem ersten Speichermodul gespeichert ist, wobei die Vielzahl von Speichermodulen das erste Speichermodul umfasst und die Datentabelle den ersten Eintrag umfasst,
∘ Empfangen, durch das Verarbeitungsmodul, einer zweiten Suchanforderung, wobei die zweite Suchanforderung zweite Schlüsselinformationen enthält, und die erste Suchanforderung und die zweite Suchanforderung Suchanforderungen sind, die gleichzeitig durch das Verarbeitungsmodul verarbeitet werden müssen,
∘ Bestimmen, durch das Verarbeitungsmodul, des ersten Speichermoduls basierend auf den zweiten Schlüsselinformationen; und
∘ Zwischenspeichern, durch das Verarbeitungsmodul, einer Suchanforderung der zweiten Suchanforderung in einem Zwischenspeicherraum des Verarbeitungsmoduls basierend darauf, dass ein Speichermodul, das in der ersten Suchanforderung angefordert wird, dasselbe wie ein Speichermodul, das in der zweiten Suchanforderung angefordert wird, ist, und Fortsetzen, durch das Verarbeitungsmodul, des Verarbeitens der zweiten Suchanforderung nach Abschließen des Verarbeitens der ersten Suchanforderung.

12. Verfahren nach Anspruch 11, wobei das Bestimmen (S102), durch das Verarbeitungsmodul basierend auf den ersten Schlüsselinformationen, des ersten Speichermoduls umfasst:
∘ Bestimmen, durch das Verarbeitungsmodul, des ersten Speichermoduls basierend auf den ersten Schlüsselinformationen und einer ersten Mapping-Beziehung, wobei die erste Mapping-Beziehung eine Mapping-Beziehung zwischen den ersten Schlüsselinformationen und einer Kennung des ersten Speichermoduls umfasst.

13. Verfahren nach Anspruch 11 oder 12, wobei das Bestimmen, durch das Verarbeitungsmodul basierend auf den ersten Schlüsselinformationen, des ersten Eintrags, der in dem ersten Speichermodul gespeichert ist, umfasst:
∘ Bestimmen, durch das Verarbeitungsmodul, einer ersten Speicheradresse basierend auf den ersten Schlüsselinformationen, wobei die erste Speicheradresse einen Speicherort des ersten Eintrags in dem ersten Speichermodul angibt.

14. Verfahren nach einem der Ansprüche 11 bis 13, wobei das Verfahren ferner umfasst:
∘ Erhalten, durch das Verarbeitungsmodul, der Datentabelle basierend auf einer Schreibanforderung, wobei die Schreibanforderung eine Schreibanforderung, die durch das Verarbeitungsmodul empfangen wird, ist;
∘ Bestimmen, durch das Verarbeitungsmodul, der ersten Schlüsselinformationen des ersten Eintrags in der Datentabelle; und
∘ Schreiben, durch das Verarbeitungsmodul, des ersten Eintrags in das erste Speichermodul basierend auf den ersten Schlüsselinformationen und gemäß einem vorbestimmten Algorithmus, wobei der vorbestimmte Algorithmus verwendet wird, um Speicheradressen von Einträgen, die in das mindestens eine der Vielzahl von Speichermodulen geschrieben werden, nicht aufeinanderfolgend zu machen.

15. Verfahren nach Anspruch 14, wobei der vorbestimmte Algorithmus einen von einem Hash-Algorithmus und einem Zufallsalgorithmus umfasst.

16. Verfahren nach Anspruch 14 oder 15, wobei das Verfahren ferner umfasst:
∘ Erzeugen, durch das Verarbeitungsmodul, der ersten Mapping-Beziehung, wobei die erste Mapping-Beziehung die Mapping-Beziehung zwischen den ersten Schlüsselinformationen und der Kennung des ersten Speichermoduls umfasst.

17. Verfahren nach einem der Ansprüche 12 bis 16, wobei die Datensuchvorrichtung ferner ein Zwischenspeichermodul umfasst, wobei das Zwischenspeichermodul konfiguriert ist, um einen Eintrag mit der Zugriffsfrequenz, die größer als ein Frequenzschwellenwert ist, in der Datentabelle zu speichern; und
das Bestimmen, durch das Verarbeitungsmodul basierend auf den ersten Schlüsselinformationen, des ersten Speichermoduls und eines ersten Eintrags, der in dem ersten Speichermodul gespeichert ist, umfasst:
∘ Bestimmen, durch das Verarbeitungsmodul, dass der erste Eintrag nicht in dem Zwischenspeichermodul gespeichert ist; und Bestimmen, durch das Verarbeitungsmodul basierend auf den ersten Schlüsselinformationen, des ersten Speichermoduls und des ersten Eintrags, der in dem ersten Speichermodul gespeichert ist.

## Revendications

1. Appareil de recherche de données, dans lequel l'appareil de recherche de données est appliqué à un dispositif de réseau, et l'appareil de recherche de données comprend une pluralité de modules de stockage (1, 2...m),
∘ dans lequel la pluralité de modules de stockage (1, 2...m) sont configurés pour stocker une table de données, un quelconque parmi la pluralité de modules de stockage (1, 2...m) stocke une partie d'entrées de la table de données, une quelconque entrée dans la table de données est unique dans la pluralité de modules de stockage (1, 2...m), et des adresses de stockage d'entrées stockées dans au moins l'un parmi la pluralité de modules de stockage (1, 2...m) sont non consécutives, dans lequel une adresse de stockage indique un emplacement de stockage d'une entrée dans un module de stockage spécifique,
∘ dans lequel l'appareil de recherche de données comprend en outre un module de traitement (30), dans lequel le module de traitement (30) est connecté à la pluralité de modules de stockage (1, 2...m) ; et
∘ le module de traitement (30) est configuré pour déterminer, sur la base de premières informations clés transportées dans une première demande de recherche, un premier module de stockage et une première entrée stockée dans le premier module de stockage, dans lequel la pluralité de modules de stockage (1, 2...m) comprend le premier module de stockage, la table de données comprend la première entrée, et la première demande de recherche est une demande de recherche reçue par le module de traitement (30),
∘ dans lequel le module de traitement (30) est en outre configuré pour :
▪ recevoir une seconde demande de recherche, dans lequel la seconde demande de recherche transporte des secondes informations clés, et la première demande de recherche et la seconde demande de recherche sont des demandes de recherche qui doivent être traitées simultanément par le module de traitement (30) ;
▪ déterminer le premier module de stockage sur la base des secondes informations clés ; et
▪ mettre en mémoire cache une exigence de recherche de la seconde demande de recherche dans un espace de mémoire cache du module de traitement (30) sur la base du fait qu'un module de stockage demandé dans la première demande de recherche est identique à un module de stockage demandé dans la seconde demande de recherche, et poursuivre le traitement de la seconde demande de recherche après avoir achevé le traitement de la première demande de recherche.

2. Appareil de recherche de données selon la revendication 1, dans lequel le premier module de stockage est déterminé en outre sur la base d'une première relation de mise en correspondance, dans lequel la première relation de mise en correspondance comprend une relation de mise en correspondance entre les premières informations clés et un identifiant du premier module de stockage.

3. Appareil de recherche de données selon la revendication 1 ou 2, dans lequel le module de traitement (30) est configuré pour déterminer une première adresse de stockage sur la base des premières informations clés, dans lequel la première adresse de stockage indique un emplacement de stockage de la première entrée dans le premier module de stockage.

4. Appareil de recherche de données selon l'une quelconque des revendications 1 à 3, dans lequel le module de traitement (30) est en outre configuré pour :
∘ obtenir la table de données sur la base d'une demande d'écriture, dans lequel la demande d'écriture est une demande d'écriture reçue par le module de traitement (30) ;
∘ déterminer les premières informations clés de la première entrée dans la table de données ; et
∘ écrire la première entrée dans le premier module de stockage sur la base des premières informations clés et selon un algorithme prédéterminé, dans lequel l'algorithme prédéterminé est utilisé pour rendre non consécutives des adresses de stockage d'entrées écrites dans l'au moins un parmi la pluralité de modules de stockage (1, 2...m).

5. Appareil de recherche de données selon la revendication 4, dans lequel l'algorithme prédéterminé comprend un parmi un algorithme de hachage et un algorithme aléatoire.

6. Appareil de recherche de données selon la revendication 4 ou 5, dans lequel le module de traitement (30) est en outre configuré pour générer la première relation de mise en correspondance, dans lequel la première relation de mise en correspondance comprend la relation de mise en correspondance entre les premières informations clés et l'identifiant du premier module de stockage.

7. Appareil de recherche de données selon l'une quelconque des revendications 1 à 6, dans lequel l'appareil de recherche de données comprend en outre un module de mémoire cache (40), dans lequel le module de mémoire cache (40) est connecté au module de traitement (30) ;
le module de mémoire cache (40) est configuré pour stocker une entrée avec une fréquence d'accès supérieure à un seuil de fréquence dans la table de données ; et le module de traitement (30) est en outre configuré pour déterminer, sur la base des premières informations clés transportées dans la première demande de recherche, que la première entrée n'est pas stockée dans le module de mémoire cache (40).

8. Appareil de recherche de données selon l'une quelconque des revendications 1 à 6, dans lequel le module de traitement (30) comprend un module de commutation (301) et une pluralité de sous-modules de recherche, dans lequel le module de commutation (301) est connecté à la pluralité de sous-modules de recherche, et la pluralité de sous-modules de recherche sont connectés à la pluralité de modules de stockage (1, 2...m) en correspondance biunivoque ;
le module de commutation (301) est configuré pour déterminer un module de stockage qui stocke une entrée dans la table de données ; et
la pluralité de sous-modules de recherche sont configurés pour déterminer une entrée dans la table de données stockée dans la pluralité de modules de stockage (1, 2...m).

9. Appareil de recherche de données selon la revendication 8, dans lequel le module de commutation (301) est configuré pour déterminer le premier module de stockage sur la base des premières informations clés ; et
un premier sous-module de recherche est configuré pour déterminer, sur la base des premières informations clés, la première entrée stockée dans le premier module de stockage, dans lequel la pluralité de sous-modules de recherche comprend le premier sous-module de recherche.

10. Dispositif de réseau, comprenant l'appareil de recherche de données selon l'une quelconque des revendications 1 à 9.

11. Procédé de recherche de données, appliqué à un appareil de recherche de données, dans lequel l'appareil de recherche de données comprend un module de traitement et une pluralité de modules de stockage, dans lequel la pluralité de modules de stockage sont configurés pour stocker une table de données, un quelconque parmi la pluralité de modules de stockage stocke une partie d'entrées de la table de données, une quelconque entrée dans la table de données est unique dans la pluralité de modules de stockage, et des adresses de stockage d'entrées stockées dans au moins l'un parmi la pluralité de modules de stockage sont non consécutives, dans lequel une adresse de stockage indique un emplacement de stockage d'une entrée dans un module de stockage spécifique ; et le procédé comprend :
∘ la réception (S101), par le module de traitement, d'une première demande de recherche, dans lequel la première demande de recherche transporte des premières informations clés ; et
∘ la détermination (S102), par le module de traitement sur la base des premières informations clés, d'un premier module de stockage et d'une première entrée stockée dans le premier module de stockage, dans lequel la pluralité de modules de stockage comprend le premier module de stockage, et la table de données comprend la première entrée,
∘ la réception, par le module de traitement, d'une seconde demande de recherche, dans lequel la seconde demande de recherche transporte des secondes informations clés, et la première demande de recherche et la seconde demande de recherche sont des demandes de recherche qui doivent être traitées simultanément par le module de traitement,
∘ la détermination, par le module de traitement, du premier module de stockage sur la base des secondes informations clés ; et
∘ la mise en mémoire cache, par le module de traitement, d'une exigence de recherche de la seconde demande de recherche dans un espace de mémoire cache du module de traitement sur la base du fait qu'un module de stockage demandé dans la première demande de recherche est identique à un module de stockage demandé dans la seconde demande de recherche, et la poursuite, par le module de traitement, du traitement de la seconde demande de recherche après avoir achevé le traitement de la première demande de recherche.

12. Procédé selon la revendication 11, dans lequel la détermination (S102), par le module de traitement sur la base des premières informations clés, du premier module de stockage comprend :
∘ la détermination, par le module de traitement, du premier module de stockage sur la base des premières informations clés et d'une première relation de mise en correspondance, dans lequel la première relation de mise en correspondance comprend une relation de mise en correspondance entre les premières informations clés et un identifiant du premier module de stockage.

13. Procédé selon la revendication 11 ou 12, dans lequel la détermination, par le module de traitement sur la base des premières informations clés, de la première entrée stockée dans le premier module de stockage comprend :
∘ la détermination, par le module de traitement, d'une première adresse de stockage sur la base des premières informations clés, dans lequel la première adresse de stockage indique un emplacement de stockage de la première entrée dans le premier module de stockage.

14. Procédé selon l'une quelconque des revendications 11 à 13, dans lequel le procédé comprend en outre :
∘ l'obtention, par le module de traitement, de la table de données sur la base d'une demande d'écriture, dans lequel la demande d'écriture est une demande d'écriture reçue par le module de traitement ;
∘ la détermination, par le module de traitement, des premières informations clés de la première entrée dans la table de données ; et
∘ l'écriture, par le module de traitement, de la première entrée dans le premier module de stockage sur la base des premières informations clés et selon un algorithme prédéterminé, dans lequel l'algorithme prédéterminé est utilisé pour rendre non consécutives des adresses de stockage d'entrées écrites dans l'au moins un parmi la pluralité de modules de stockage.

15. Procédé selon la revendication 14, dans lequel l'algorithme prédéterminé comprend un parmi un algorithme de hachage et un algorithme aléatoire.

16. Procédé selon la revendication 14 ou 15, dans lequel le procédé comprend en outre :
∘ la génération, par le module de traitement, de la première relation de mise en correspondance, dans lequel la première relation de mise en correspondance comprend la relation de mise en correspondance entre les premières informations clés et l'identifiant du premier module de stockage.

17. Procédé selon l'une quelconque des revendications 12 à 16, dans lequel l'appareil de recherche de données comprend en outre un module de mémoire cache, dans lequel le module de mémoire cache est configuré pour stocker une entrée avec une fréquence d'accès supérieure à un seuil de fréquence dans la table de données ; et la détermination, par le module de traitement sur la base des premières informations clés, du premier module de stockage et d'une première entrée stockée dans le premier module de stockage comprend :
∘ le fait de déterminer, par le module de traitement, que la première entrée n'est pas stockée dans le module de mémoire cache ; et la détermination, par le module de traitement sur la base des premières informations clés, du premier module de stockage et de la première entrée stockée dans le premier module de stockage.
